(19) Europäisches Patentamt
European Patent Office
Office européen des brevets

(11) **EP 4 755 929 A1**

(12) **EUROPEAN PATENT APPLICATION**
published in accordance with Art. 153(4) EPC

(43) Date of publication:
**10.06.2026 Bulletin 2026/24**

(21) Application number: **24848576.5**

(22) Date of filing: **04.03.2024**

(51) International Patent Classification (IPC):
**C08F 4/654** (2006.01)          **C08F 4/02** (2006.01)
**C08F 10/00** (2006.01)

(52) Cooperative Patent Classification (CPC):
**C08F 4/02; C08F 4/654; C08F 10/00**

(86) International application number:
**PCT/JP2024/007993**

(87) International publication number:
**WO 2025/027915 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.07.2023 JP 2023124097**

(71) Applicant: **TOHO TITANIUM CO., LTD.**
**Chigasaki-shi, Kanagawa 253-8510 (JP)**

(72) Inventors:
• **KONO, Hiroyuki**
  **Chigasaki-shi, Kanagawa 253-8510 (JP)**
• **SAKEMI, Takaharu**
  **Chigasaki-shi, Kanagawa 253-8510 (JP)**

(74) Representative: **Müller-Boré & Partner**
**Patentanwälte PartG mbB**
**Friedenheimer Brücke 21**
**80639 München (DE)**

(54) **SOLID CATALYST COMPONENT FOR OLEFIN POLYMERIZATION, METHOD FOR PRODUCING SOLID CATALYST COMPONENT FOR OLEFIN POLYMERIZATION, CATALYST FOR OLEFIN POLYMERIZATION, AND METHOD FOR PRODUCING OLEFIN POLYMER**

(57)     A solid catalyst component for polymerization of an olefin, wherein a sum of a content of a 1,3-diether compound not having a fluorene structure and a content of a succinic acid diester compound in a total content of the components in terms of the solid content is 13.0% by mass or more, a molar ratio (S/T), represented by a molar content of the succinic acid diester compound (S) to a molar content of titanium (T), is 0.71 to 1.30, a molar ratio (E/S), represented by a molar content of the 1,3-diether compound not having a fluorene structure (E) to the molar content of the succinic acid diester compound (S), is 0.10 to 0.70, and a total pore volume of a diameter of 1 $\mu$m or less is 0.3 to 1.0 cm$^3$/g, and a specific surface area is 200 m$^2$/g or more. The present invention can accordingly provide the solid catalyst component for polymerization of an olefin comprising an internal electron-donating compound other than phthalate esters, and capable of producing a polymer of an olefin having an excellent melt flow rate, high rigidity, and a reduced amount of low molecular weight polymers.

**EP 4 755 929 A1**

## Description

[Technical Field]

The present invention relates to a solid catalyst component for polymerization of an olefin, a method for producing a solid catalyst component for polymerization of an olefin, a catalyst for polymerization of an olefin, a method for producing a polymer of an olefin, and a polymer of an olefin.

[Background Art]

In recent years, polymers of olefins such as polypropylene (PP) are utilized for various applications such as containers and films in addition to molded products such as automobile parts and household appliances.

A polypropylene resin composition is lightweight and highly moldable, excellent in chemical stability such as heat resistance and chemical resistance of molded articles, and extremely excels in cost-effectiveness. For this reason, such a resin composition is used in many fields as one of the most important plastic materials.

For further expanding applications, polypropylene that is capable of being used as an alternative to polystyrene or ABS resin and that has a reduced amount of low molecular weight components and amorphous polymers, a high melt flow rate (MFR), excellent moldability, and high rigidity has been in demand.

For polymerizing olefins such as propylene, a polymerization method using a solid catalyst component comprising a magnesium atom, a titanium atom, a halogen atom, and an internal electron-donating compound as essential components is known, and many methods for polymerizing or copolymerizing olefins in the presence of a catalyst for polymerization of an olefin composed of the above solid catalyst components, an organoaluminum compound, and an organosilicon compound are proposed.

For example, Patent Literature 1 proposes a method for polymerizing propylene using a catalyst for polymerization of an olefin comprising a solid titanium catalyst component on which an internal electron-donating compound such as phthalate esters is supported, an organoaluminum compound as a cocatalyst component, and an organosilicon compound having at least one Si-O-C bond. Many literatures including Patent Literature 1 propose the method for obtaining a highly tactic polymer using a phthalate ester as an internal electron-donating compound under high polymerization activity.

[Citation List]

[Patent Literature]

[Patent Literature 1] Japanese Patent Laid-Open No. 57-63310

[Summary of Invention]

[Technical Problem]

However, di-n-butyl phthalate and butyl benzyl phthalate, a kind of the phthalate ester, are designated as Substance of Very High Concern (SVHC) under The Regulation on the Registration, Evaluation, Authorization and Restriction of Chemicals (REACH) in Europe. For this reason, a demand for converting to a SVHC substance free catalyst system has been increasing from the view point of reducing environmental impact.

Thus, the present inventors have examined a solid catalyst component for polymerization of an olefin comprising an internal electron-donating compound other than phthalate esters, and have found that, by using a succinic acid diester compound as the internal electron-donating compound, it is possible to obtain polypropylene having high rigidity with a flexural modulus (FM) of 1900 MPa or more.

However, it was found that such polypropylene has a low hydrogen response. For this reason, it has been difficult to produce polypropylene achieving both a high melt flow rate (MFR) and high rigidity by using a solid catalyst component containing an internal electron-donating compound other than phthalate esters as the solid catalyst component for polymerization of an olefin.

In addition, a solid catalyst component for polymerization of an olefin that uses a succinic acid diester compound as the internal electron-donating compound exhibits a broad molecular weight distribution when used for polymerization of an olefin. For this reason, it contains a large amount of low molecular weight polymers, and these low molecular weight polymers adversely affect the physical properties and moldability of the polymer.

Under such circumstances, the present invention aims to provide a solid catalyst component for polymerization of an olefin comprising an internal electron-donating compound other than phthalate esters, and capable of producing a polymer of an olefin having an excellent melt flow rate, high rigidity, and a reduced amount of low molecular weight polymers.

[Solution to Problem]

For achieving the above technical issue, the present inventors conducted extensive studies and consequently found that the above technical issues can be achieved by a solid catalyst component for polymerization of an olefin comprising magnesium, titanium, halogen, a 1,3-diether compound not having a fluorene structure, and a succinic acid diester compound, the solid catalyst component for polymerization of an olefin having a total pore volume of a diameter of 1 $\mu$m or less as measured by a mercury intrusion method of 0.3 to 1.0 cm$^3$/g, and a specific surface area of 200 m$^2$/g or more, wherein a sum of a content of the 1,3-diether compound not having a fluorene structure and a content of the succinic acid diester compound in a total content of the components in terms of the solid content is 13.0% by mass or more, a molar ratio (S/T), represented by a molar content of the succinic acid diester compound (S) in the total content of the components to a molar content of the titanium (T), is 0.71 to 1.30, and a molar ratio (E/S), represented by a molar content of the 1,3-diether compound not having a fluorene structure (E) to the molar content of the succinic acid diester compound (S), is 0.10 to 0.70, based on which the present invention has come to accomplishment.

More specifically, the present invention provides:

(1) a solid catalyst component for polymerization of an olefin comprising:

magnesium, titanium, halogen, a 1,3-diether compound not having a fluorene structure, and a succinic acid diester compound,
wherein a sum of a content of the 1,3-diether compound not having a fluorene structure and a content of the succinic acid diester compound in a total content of the components in terms of the solid content is 13.0% by mass or more,
a molar ratio (S/T), represented by a molar content of the succinic acid diester compound (S) in the total content of the components to a molar content of the titanium (T) in the total content of the components, is 0.71 to 1.30,
a molar ratio (E/S), represented by a molar content of the 1,3-diether compound not having a fluorene structure (E) in the total content of the components to the molar content of the succinic acid diester compound (S) in the total content of the components, is 0.10 to 0.70, and
a total pore volume of a diameter of 1 $\mu$m or less as measured by a mercury intrusion method is 0.3 to 1.0 cm$^3$/g, and a specific surface area is 200 m$^2$/g or more,

(2) the solid catalyst component for polymerization of an olefin according to (1), wherein the 1,3-diether compound not having a fluorene structure is one or more compounds selected from the 1,3-diether compounds represented by the following formula (1):

$$R^1\text{-}O\text{-}CH_2\text{-}CR^2R^3\text{-}CH_2\text{-}O\text{-}R^4 \qquad (1)$$

wherein $R^2$ and $R^3$ represent a hydrogen atom, a halogen atom, an alkyl group having 1 to 12 carbon atoms, a vinyl group, an alkenyl group having 3 to 12 carbon atoms, a cycloalkyl group or cycloalkenyl group having 3 to 12 carbon atoms, an aromatic hydrocarbon group or halogen-substituted aromatic hydrocarbon group having 6 to 12 carbon atoms, an aromatic hydrocarbon group having 7 to 12 carbon atoms and having a substituent, an alkylamino group having 1 to 12 carbon atoms, or a dialkylamino group having 2 to 12 carbon atoms; $R^2$ and $R^3$ may be the same as or different from each other; $R^2$ and $R^3$ may be bonded to each other to form a ring; $R^1$ and $R^4$ represent an alkyl group having 1 to 12 carbon atoms, a vinyl group, an alkenyl group having 3 to 12 carbon atoms, a cycloalkyl group having 3 to 6 carbon atoms, an aromatic hydrocarbon group or halogen-substituted aromatic hydrocarbon group having 6 to 12 carbon atoms, or an aromatic hydrocarbon group having 7 to 12 carbon atoms and having a substituent; and $R^1$ and $R^4$ may be the same as or different from each other,

(3) the solid catalyst component for polymerization of an olefin according to (1), wherein the succinic acid diester compound is one or more compounds selected from the compounds represented by the following formula (2):

$$R^5\text{-}O\text{-}C(=O)\text{-}CHR^6CHR^7\text{-}C(=O)\text{-}O\text{-}R^8 \qquad (2)$$

wherein $R^6$ and $R^7$, the same as or different from each other, are a hydrogen atom or an alkyl group having 1 to 4 carbon atoms, and $R^5$ and $R^8$, the same as or different from each other, are a straight chain alkyl group or branched chain alkyl group having 2 to 4 carbon atoms,

(4) a method for producing the solid catalyst component for polymerization of an olefin according to any one of (1) to (3) by allowing a dialkoxy magnesium, a titanium halogen compound, a 1,3-diether compound not having a fluorene structure, and a succinic acid diester compound to mutually contact,

wherein the titanium halogen compound is allowed to contact the dialkoxy magnesium multiple times, of which when the titanium halogen compound is allowed to contact the dialkoxy magnesium for the first time, a contact amount of the titanium halogen compound per 1.0 mol of the dialkoxy magnesium is 1.5 to 10.0 mol, a total amount of the titanium halogen compound used per 1.0 mol of the dialkoxy magnesium is 5.0 to 18.0 mol, a sum of a molar amount of the 1,3-diether compound not having a fluorene structure used and a molar amount of the succinic acid diester compound used per 1.0 mol of the dialkoxy magnesium is 0.10 to 0.20 mol, a molar ratio (S/T), represented by a molar amount of the succinic acid diester compound used (S) to a total molar amount of the titanium halogen compound used (T), is 0.020 to 0.040, a molar ratio (E/S), represented by a molar amount of the 1,3-diether compound not having a fluorene structure used (E) to the molar amount of the succinic acid diester compound used (S), is 0.50 or less, and the dialkoxy magnesium is composed of secondary particles that are assemblies of primary particles having an average particle diameter of less than 2 $\mu$m, has a specific surface area of 10 m$^2$/g or more and less than 50 m$^2$/g, and has a particle size distribution index (SPAN) of 1.30 or less,

(5) a catalyst for polymerization of an olefin comprising:

(I) the solid catalyst component for polymerization of an olefin according to any one of (1) to (3), and
(II) an organoaluminum compound represented by the following formula (3):

$$R^9{}_pAlQ_{3-p} \qquad (3)$$

wherein R$^9$ is an alkyl group having 1 to 6 carbon atoms, Q is a hydrogen atom or halogen, and p satisfies $0 < p \leq 3$, wherein when more than one R$^9$ are present, each R$^9$ may be the same as or different from each other, and when more than one Q are present, each Q may be the same or different,
(6) a catalyst for polymerization of an olefin of (5) comprising:

(I) the solid catalyst component for polymerization of an olefin according to any one of (1) to (3),
(II) an organoaluminum compound represented by the following formula (3):

$$R^9{}_pAlQ_{3-p} \qquad (3)$$

wherein R$^9$ is an alkyl group having 1 to 6 carbon atoms, Q is a hydrogen atom or halogen, and p satisfies $0 < p \leq 3$, wherein when more than one R$^9$ are present, each R$^9$ may be the same as or different from each other, and when more than one Q are present, each Q may be the same or different, and
(III) an external electron-donating compound,

(7) a method for producing a polymer of an olefin, comprising polymerizing an olefin using the catalyst for polymerization of an olefin according to (5) or (6).

[Advantageous Effects of Invention]

The present invention can accordingly provide a solid catalyst component for polymerization of an olefin comprising an internal electron-donating compound other than phthalate esters, and capable of producing a polymer of an olefin having an excellent melt flow rate, high rigidity, and a reduced amount of low molecular weight polymers.

[Brief Description of Drawings]

[Figure 1] Figure 1 is a drawing showing a method for creating a measurement specimen for measuring a percentage of the oriented layers at the cross section of an injection molded plate of a polymer of an olefin.
[Figure 2] Figure 2 is drawings showing a method for creating a measurement specimen for measuring a percentage of the oriented layers at the cross section of an injection molded plate of a polymer of an olefin.
[Figure 3] Figure 3 is a drawing for showing a method for specifying percentages of the oriented layers.

[Description of Embodiments]

First, the solid catalyst component for polymerization of an olefin according to the present invention will be described. The solid catalyst component for polymerization of an olefin according to the present invention comprises:

> magnesium, titanium, halogen, a 1,3-diether compound not having a fluorene structure, and a succinic acid diester compound,
> wherein a sum of a content of the 1,3-diether compound not having a fluorene structure and a content of the succinic acid diester compound in a total content of the components in terms of the solid content is 13.0% by mass or more,
> a molar ratio (S/T), represented by a molar content of the succinic acid diester compound (S) in the total content of the components to a molar content of the titanium (T) in the total content of the components, is 0.71 to 1.30,
> a molar ratio (E/S), represented by a molar content of the 1,3-diether compound not having a fluorene structure (E) in the total content of the components to the molar content of the succinic acid diester compound (S) in the total content of the components, is 0.10 to 0.70, and
> a total pore volume of a diameter of 1 $\mu$m or less as measured by a mercury intrusion method is 0.3 to 1.0 cm$^3$/g, and a specific surface area is 200 m$^2$/g or more.

Examples of the solid catalyst component for polymerization of an olefin according to the present invention include a contact reactant obtained through a reaction in which a raw material component to be a source of magnesium supply, a raw material component to be a source of titanium and halogen supply, the 1,3-diether compound not having a fluorene structure, and the succinic acid diester compound which are internal electron-donating compounds are allowed to mutually contact in an organic solvent. Specific examples include a contact reactant obtained by using dialkoxy magnesium as the raw material component to be a source of magnesium supply and a tetravalent titanium halogen compound as the raw material component to be a source of titanium and halogen supply, and allowing these raw materials to mutually contact the internal electron-donating compound comprising the 1,3-diether compound not having a fluorene structure and the succinic acid diester compound.

In the solid catalyst component for polymerization of an olefin according to the present invention, examples of dialkoxy magnesium, which is the raw material component to be a source of magnesium supply, specifically include dimethoxy magnesium, diethoxymagnesium, dipropoxymagnesium, dibutoxy magnesium, ethoxymethoxy magnesium, ethoxypropoxy magnesium, and butoxyethoxy magnesium, with diethoxy magnesium being particularly preferable.

The above dialkoxy magnesium may be those obtained by reacting metal magnesium with alcohol in the presence of halogen or a halogen-containing metal compound.

The above dialkoxy magnesium is preferably granular or powder, and the usable shape thereof can be irregular or spherical.

When spherical dialkoxy magnesium is used, a polymer powder having even better particle shape (more spherical) and a narrower particle size distribution is obtained, whereby handling operability of the polymer powder formed during polymerization process is enhanced, and the occurrence of blockage and the like caused by the fine powder contained in the formed polymer powder can be inhibited.

The above spherical dialkoxy magnesium does not need to be true spherical, and oval shape or a potato shape dialkoxy magnesium can also be used.

The mean particle diameter (mean particle diameter D50) of the above dialkoxy magnesium is preferably 1.0 to 200.0 $\mu$m, and more preferably 5.0 to 150.0 $\mu$m. The mean particle diameter D50 herein means the particle size at 50% of accumulated particle sizes in the volume accumulated particle size distribution when measured using a laser diffraction scattering particle size analyzer.

When dialkoxy magnesium is spherical, the above mean particle diameter D50 is preferably 1.0 to 100.0 $\mu$m, more preferably 5.0 to 80.0 $\mu$m, and further preferably 10.0 to 70.0 $\mu$m.

Additionally, the particle size distribution of dialkoxy magnesium is preferably narrow particle size distribution with a small amount of fine powder and coarse powder.

Specifically, dialkoxy magnesium has, when measured using a laser diffraction scattering particle size analyzer, particles having a particle size of 5.0 $\mu$m or less of preferably 20% or less, and more preferably 10% or less. On the other hand, dialkoxy magnesium has, when measured using a laser diffraction scattering particle size analyzer, particles having a particle size of 100.0 $\mu$m or more of preferably 20% or less, and more preferably 10% or less.

Further, the particle size distribution, when represented by l n (D90/D10), is preferably 3 or less, and more preferably 2 or less. D90 herein means the particle size at 90% of accumulated particle sizes in the volume accumulated particle size distribution when measured using a laser diffraction scattering particle size analyzer. D10 herein means the particle size at 10% of accumulated particle sizes in the volume accumulated particle size distribution when measured using a laser diffraction scattering particle size analyzer. D50, which will be described later, means the particle size at 50% of accumulated particle sizes in the volume accumulated particle size distribution when measured using a laser diffraction scattering particle size analyzer.

The method for producing the above spherical dialkoxy magnesium are described in, for example, Japanese Patent Laid-Open No. 62-51633, Japanese Patent Laid-Open No. 3-74341, Japanese Patent Laid-Open No. 4-368391, Japanese Patent Laid-Open No. 8-73388 and the like.

In the solid catalyst component for polymerization of an olefin according to the present invention, it is preferable that the dialkoxy magnesium is composed of secondary particles that are assemblies of primary particles having an average particle diameter of less than 2 $\mu$m. When such a dialkoxy magnesium is used, a solid catalyst component for polymerization of an olefin having a desired specific surface area and pore volume can be easily prepared.

In the solid catalyst component for polymerization of an olefin according to the present invention, the dialkoxy magnesium has a specific surface area of preferably 10 m$^2$/g or more and less than 50 m$^2$/g, more preferably 10 to 50 m$^2$/g, and still more preferably 10 to 40 m$^2$/g. When such a dialkoxy magnesium having a specific surface area within the above range is used, a solid catalyst component for polymerization of an olefin having a desired specific surface area can be easily prepared.

In the solid catalyst component for polymerization of an olefin according to the present invention, the dialkoxy magnesium has a particle size distribution index (SPAN = (D90 - D10)/D50) of preferably 1.30 or less, more preferably 0.60 to 1.00, and still more preferably 0.70 to 0.90, when measured using a laser diffraction scattering particle size analyzer. When such a dialkoxy magnesium having a particle size distribution index (SPAN) within the above range is used, handling operability of the polymer powder formed during polymerization process is enhanced, and the occurrence of blockage and the like caused by the fine powder contained in the formed polymer powder can be inhibited.

In the present invention, whether the dialkoxy magnesium is composed of secondary particles that are assemblies of primary particles having an average particle diameter of less than 2 $\mu$m is confirmed by visual observation of negatives photographed using a scanning electron microscope. The primary particle diameter is calculated by a statistical analysis method based on the longest diameter of each of 100 or more particles, and the secondary particle diameter is confirmed by measurement using a laser diffraction scattering particle size analyzer.

In the present application document, the specific surface area of dialkoxy magnesium means the value measured by the BET method, and specifically the specific surface area of dialkoxy magnesium means the value obtained by vacuum drying a measurement specimen in advance at 50°C for 2 hours and measuring by the BET method (automatic measurement) using Automatic Surface Area Analyzer HM model-1230 manufactured by Mountech, in the presence of a mixed gas of nitrogen and helium.

The above dialkoxy magnesium is preferably in the form of a solution or a suspension when reacted, and the form of a solution or a suspension can allow the reaction to preferably proceed.

When the above dialkoxy magnesium is solid, the solid dialkoxy magnesium is dissolved in a solvent capable of solubilizing dialkoxy magnesium to prepare dialkoxy magnesium in the form of a solution, or suspended in a solvent incapable of solubilizing dialkoxy magnesium to prepare dialkoxy magnesium in the form of a suspension.

When the above dialkoxy magnesium is liquid, dialkoxy magnesium in the form of a solution may directly be used, or may further be dissolved in a solvent capable of solubilizing dialkoxy magnesium and used as dialkoxy magnesium in the form of a solution.

Examples of the compound capable of solubilizing solid dialkoxy magnesium include at least one compound selected from the group consisting of alcohol, ether, and ester, with alcohols such as ethanol, propanol, butanol, and 2-ethylhexanol being preferable, and 2-ethylhexanol being particularly preferable.

On the other hand, examples of the medium incapable of solubilizing solid dialkoxy magnesium include one or more solvents selected from saturated hydrocarbon solvents and unsaturated hydrocarbon solvents which do not dissolve dialkoxy magnesium.

In the solid catalyst component for polymerization of an olefin according to the present invention, the tetravalent titanium halogen compound as the raw material component to be a source of titanium and halogen supply is not particularly limited, but preferably one or more compounds selected from the group consisting of titanium halide and alkoxy titanium halide represented by the following formula (4)

$$Ti(OR^{10})_r X_{4-r} \qquad (4)$$

wherein R$^{10}$ is an alkyl group having 1 to 4 carbon atoms, X is a halogen atom such as a chlorine atom, a bromine atom, an iodine atom, and r satisfies $0 \leq r \leq 3$.

In the above formula (4), r satisfies $0 \leq r \leq 3$, and specifically, r is 0, 1, 2, or 3.

Examples of the titanium halide represented by the above formula (4) include one or more titanium tetrahalides selected from titanium tetrachloride, titanium tetrabromide, titanium tetraiodide and the like.

Examples of the alkoxy titanium halide represented by the above formula (4) include one or more alkoxy titanium halides selected from methoxytitanium trichloride, ethoxytitanium trichloride, propoxytitanium trichloride, n-butoxytitanium trichloride, dimethoxytitanium dichloride, diethoxytitanium dichloride, dipropoxytitanium dichloride, di-n-butoxytitanium dichloride, trimethoxytitanium chloride, triethoxytitanium chloride, tripropoxytitanium chloride, tri-n-butoxytitanium chloride and the like.

The tetravalent titanium halogen compound is preferably titanium tetrahalide, and more preferably titanium tetrachloride.

These titanium compounds may be used singly, or 2 or more compounds can also be used in combination.

In the solid catalyst component for polymerization of an olefin according to the present invention, the 1,3-diether compound not having a fluorene structure refers to a compound that has a structure in which atoms are bonded in the order of carbon atom-oxygen atom-carbon atom-carbon atom-carbon atom-oxygen atom-carbon atom, and that does not have a fluorene structure in the molecule.

Examples of the 1,3-diether compound not having a fluorene structure include one or more compounds selected from the 1,3-diether compounds represented by the following formula (1):

$$R^1\text{-}O\text{-}CH_2\text{-}CR^2R^3\text{-}CH_2\text{-}O\text{-}R^4 \qquad (1)$$

wherein $R^2$ and $R^3$ represent a hydrogen atom, a halogen atom, an alkyl group having 1 to 12 carbon atoms, a vinyl group, an alkenyl group having 3 to 12 carbon atoms, a cycloalkyl group or cycloalkenyl group having 3 to 12 carbon atoms, an aromatic hydrocarbon group or halogen-substituted aromatic hydrocarbon group having 6 to 12 carbon atoms, an aromatic hydrocarbon group having 7 to 12 carbon atoms and having a substituent, an alkylamino group having 1 to 12 carbon atoms, or a dialkylamino group having 2 to 12 carbon atoms; $R^2$ and $R^3$ may be the same as or different from each other; $R^2$ and $R^3$ may be bonded to each other to form a ring; $R^1$ and $R^4$ represent an alkyl group having 1 to 12 carbon atoms, a vinyl group, an alkenyl group having 3 to 12 carbon atoms, a cycloalkyl group having 3 to 6 carbon atoms, an aromatic hydrocarbon group or halogen-substituted aromatic hydrocarbon group having 6 to 12 carbon atoms, or an aromatic hydrocarbon group having 7 to 12 carbon atoms and having a substituent; and $R^1$ and $R^4$ may be the same as or different from each other.

In the 1,3-diether compound represented by the formula (1), $R^1$ and $R^4$, the same as or different from each other, are a straight chain alkyl group or branched chain alkyl group having 1 to 4 carbon atoms.

Specifically, when $R^1$ and $R^4$ are a straight chain alkyl group or branched chain alkyl group having 1 to 4 carbon atoms, specific examples thereof include a methyl group, an ethyl group, a n-propyl group, an isopropyl group, a n-butyl group, and an isobutyl group.

In the 1,3-diether compound represented by the formula (1), $R^2$ and $R^3$, the same as or different from each other, are a hydrogen atom or an alkyl group having 2 to 5 carbon atoms.

Specifically, when $R^2$ and $R^3$ are an alkyl group having 2 to 5 carbon atoms, specific examples thereof include an ethyl group, a n-propyl group, an isopropyl group, a n-butyl group and an isobutyl group, a n-pentyl group, and an isopentyl group.

In the solid catalyst component for polymerization of an olefin according to the present invention, the 1,3-diether compound not having a fluorene structure is not particularly limited, and examples thereof include one or more compounds selected from 2-isopropyl-2-isobutyl-1,3-dimethoxypropane, 2,2-diisobutyl-1,3-dimethoxypropane, 2-isopropyl-2-isopentyl-1,3-dimethoxypropane, 2,2-dicyclohexyl-1,3-dimethoxypropane, and 2,2-bis(cyclohexylmethyl)-1,3-dimethoxypropane. Among these, one or more compounds selected from 2-isopropyl-2-isobutyl-1,3-dimethoxypropane and 2-isopropyl-2-isopentyl-1,3-dimethoxypropane are preferable.

In the solid catalyst component for polymerization of an olefin according to the present invention, examples of the succinic acid diester compound include one or more compounds selected from the compounds represented by the following formula (2):

$$R^5\text{-}O\text{-}C(=O)\text{-}CHR^6CHR^7\text{-}C(=O)\text{-}O\text{-}R^8 \qquad (2)$$

wherein, $R^6$ and $R^7$, the same as or different from each other, are a hydrogen atom or an alkyl group having 1 to 4 carbon atoms, and $R^5$ and $R^8$, the same as or different from each other, are a straight chain alkyl group or a branched chain alkyl group having 2 to 4 carbon atoms.

In the compound represented by the formula (2), $R^5$ and $R^8$, the same as or different from each other, are a straight chain alkyl group or branched chain alkyl group having 2 to 4 carbon atoms.

When $R^5$ and $R^8$ are a straight chain alkyl group or branched chain alkyl group having 2 to 4 carbon atoms, specific examples thereof include an ethyl group, a n-propyl group, an isopropyl group, a n-butyl group, and an isobutyl group.

In the compound represented by the formula (2), $R^6$ and $R^7$, the same as or different from each other, are a hydrogen atom or an alkyl group having 1 to 4 carbon atoms.

When $R^6$ and $R^7$ are an alkyl group having 1 to 4 carbon atoms, examples specifically include a methyl group, an ethyl group, a n-propyl group, an isopropyl group, a n-butyl group, and an isobutyl group.

In the solid catalyst component for polymerization of an olefin according to the present invention, the succinic acid diester compound is not particularly limited, and examples include one or more compounds selected from diethyl succinate, diethyl 2,3-dimethylsuccinate, diethyl 2,3-diethylsuccinate, diethyl 2,3-di-n-propylsuccinate, diethyl 2,3-diisopropylsuccinate, diethyl 2,3-di-n-butylsuccinate, and diethyl 2,3-diisobutylsuccinate;

di-n-propyl succinate, di-n-propyl 2,3-dimethylsuccinate, di-n-propyl 2,3-diethylsuccinate, di-n-propyl 2,3-di-n-propylsuccinate, di-n-propyl 2,3-diisopropylsuccinate, di-n-propyl 2,3-di-n-butylsuccinate, and di-n-propyl 2,3-diisobutylsuccinate;

diisopropyl succinate, diisopropyl 2,3-dimethylsuccinate, diisopropyl 2,3-diethylsuccinate, diisopropyl 2,3-di-n-propylsuccinate, diisopropyl 2,3-diisopropylsuccinate, diisopropyl 2,3-di-n-butylsuccinate, and diisopropyl 2,3-diisobutylsuccinate;

di-n-butyl succinate, di-n-butyl 2,3-dimethylsuccinate, di-n-butyl 2,3-diethylsuccinate, di-n-butyl 2,3-di-n-propylsuccinate, di-n-butyl 2,3-diisopropylsuccinate, din-butyl 2,3-di-n-butylsuccinate, and di-n-butyl 2,3-diisobutylsuccinate; and

diisobutyl succinate, diisobutyl 2,3-dimethylsuccinate, diisobutyl 2,3-diethylsuccinate, diisobutyl 2,3-di-n-propylsuccinate, diisobutyl 2,3-diisopropylsuccinate, diisobutyl 2,3-di-n-butylsuccinate, and diisobutyl 2,3-diisobutylsuccinate.

Of these dialkyl ester succinates, preferably used are diethyl succinate, di-n-propyl succinate, di-n-butyl succinate, diisobutyl succinate, diethyl 2,3-di-n-propylsuccinate, diethyl 2,3-diisopropylsuccinate, di-n-propyl 2,3-di-n-propylsuccinate, di-n-propyl 2,3-diisopropyl succinate, diisopropyl 2,3-di-n-propylsuccinate, diisopropyl 2,3-diisopropylsuccinate, di-n-butyl 2,3-di-n-propylsuccinate, di-n-butyl 2,3-diisopropylsuccinate, diisobutyl 2,3-di-n-propylsuccinate, and diisobutyl 2,3-diisopropylsuccinate.

The solid catalyst component for polymerization of an olefin according to the present invention comprises, as the essential components, the 1,3-diether compound not having a fluorene structure and the succinic acid diester compound as the internal electron-donating compounds, but may further comprise other internal electron-donating compounds (hereinafter, referred appropriately to as "other internal electron-donating compounds") than the 1,3-diether compound not having a fluorene structure and the succinic acid diester compound.

Examples of such other internal electron-donating compounds include one or more compounds selected from carbonates, acid halides, acid amides, nitriles, acid anhydrides, diether compounds, and carboxylic acid esters.

Examples of such other internal electron-donating compound specifically include one or more compounds selected from ether carbonate compounds, diester carboxylates such as diester cycloalkane dicarboxylate, diester cycloakene dicarboxylate, diester malonate, alkyl-substituted diester malonate, and diester maleate, and diether compounds.

More specifically, such other internal electron-donating compound is more preferably one or more compounds selected from ether carbonate compounds such as (2-ethoxyethyl)methyl carbonate, (2-ethoxyethyl)ethyl carbonate, and (2-ethoxyethyl)phenyl carbonate, diester dialkyl malonate such as dimethyl diisobutyl malonate, and diethyl diisobutyl malonate, diester cycloalkane dicarboxylate such as dimethyl cyclohexane-1,2-dicarboxylate.

On the other hand, the solid catalyst component for polymerization of an olefin according to the present invention has a content of phthalate esters of suitably 0.2% by mass or less (0.0 to 0.2% by mass), more suitably 0.1% by mass or less (0.0 to 0.1% by mass), and further suitably 0.0% by mass (substantially free of phthalate esters (limit of detection or less)).

In the solid catalyst component for polymerization of an olefin according to the present invention, the sum of the content of the 1,3-diether compound not having a fluorene structure and the content of the succinic acid diester compound in the total content of the components in terms of the solid content is 13.0% by mass or more, preferably 14.0% by mass or more, and more preferably 15.0% by mass or more. Also, in the solid catalyst component for polymerization of an olefin according to the present invention, the upper limit value of the sum of the content of the 1,3-diether compound not having a fluorene structure and the content of the succinic acid diester compound in the total content of the components in terms of the solid content is not particularly limited, but the sum of the content of the 1,3-diether compound not having a fluorene structure and the content of the succinic acid diester compound in the total content of the components in the total content of the components is preferably 25.0% by mass or less and more preferably 21.0% by mass or less. When the sum of the content of the 1,3-diether compound not having a fluorene structure and the content of the succinic acid diester compound in the total content of the components in the total content of the components in terms of the solid content is within the above range, a polymer of an olefin with excellent flowability and high rigidity can be easily produced when used for polymerization of an olefin.

In the solid catalyst component for polymerization of an olefin according to the present invention, the content of titanium atoms in the total content of the components in terms of the solid content is 2.0 to 6.0% by mass, preferably 2.5 to 5.0% by mass, and more preferably 2.5 to 4.0% by mass. When the content of titanium atoms in the total content of the components in terms of the solid content is within the above range, a polymer of an olefin with excellent flowability and high rigidity can be easily produced when used for polymerization of an olefin.

In the solid catalyst component for polymerization of an olefin according to the present invention, the molar ratio (S/T), represented by the molar content of the succinic acid diester compound (S) in the total content of the components to the molar content of the titanium (T) in the total content of the components, is 0.71 to 1.30, preferably 0.71 to 1.10, and more preferably 0.80 to 1.10. When the above molar ratio (S/T) is within the above range, a polymer of an olefin with excellent flowability and high rigidity can be easily produced when used for polymerization of an olefin.

In the solid catalyst component for polymerization of an olefin according to the present invention, the molar ratio (E/S), represented by the molar content of the 1,3-diether compound not having a fluorene structure (E) in the total content of the components to the molar content of the succinic acid diester compound (S) in the total content of the components, is 0.10 to 0.70, preferably 0.10 to 0.50, and more preferably 0.10 to 0.40. When the above molar ratio (E/S) is within the above range, a polymer of an olefin with excellent flowability and high rigidity can be easily produced when used for polymerization of an olefin.

In the solid catalyst component for polymerization of an olefin according to the present invention, the total pore volume of a diameter of 1 $\mu$m or less as measured by a mercury intrusion method is 0.3 to 1.0 cm$^3$/g, preferably 0.3 to 0.8 cm$^3$/g, and more preferably 0.3 to 0.6 cm$^3$/g. When the total pore volume of a diameter of 1 $\mu$m or less of the solid catalyst component for polymerization of an olefin according to the present invention as measured by a mercury intrusion method is within the above range, rubber components can be sufficiently retained in particles and a block copolymer with excellent flowability can be easily produced, when used for block polymerization of an olefin.

In the solid catalyst component for polymerization of an olefin according to the present invention, the specific surface area as measured by a mercury intrusion method is 200 m$^2$/g or more, preferably 300 to 500 m$^2$/g, and more preferably 350 to 500 m$^2$/g. When the specific surface area of the solid catalyst component for polymerization of an olefin according to the present invention as measured by a mercury intrusion method is within the above range, an olefin enters pores formed on the surface of the solid catalyst component and are then subjected to the polymerization reaction in the pores, when used for polymerization of an olefin, particularly copolymerization of an olefin. For this reason, a polymer of an olefin can be prepared under high polymerization activity, and the polymerization reaction can be performed easily under high operability while inhibiting the stickiness on the surface of the solid catalyst component associated with the formation of a copolymer.

In the solid catalyst component for polymerization of an olefin according to the present invention, the total pore volume of a diameter of 1 $\mu$m or less as measured by a mercury intrusion method and the specific surface area are within the above range, and the sum of the content of the 1,3-diether compound not having a fluorene structure and the content of the succinic acid diester compound in the total content of the components, the molar ratio (S/T) represented by the molar content of the succinic acid diester compound (S) to the molar content of the titanium (T), and the molar ratio (E/S) represented by the molar content of the 1,3-diether compound not having a fluorene structure (E) to the molar content of the succinic acid diester compound (S) are the above predetermined values. For this reason, it is possible to keep the rigidity of the polymer of an olefin obtained using the solid catalyst component high, to increase the melt flow rate, and to reduce the amount of low molecular weight polymers formed.

The solid catalyst component for polymerization of an olefin in the present invention may comprise a polysiloxane.

When the solid catalyst component for polymerization of an olefin in the present invention comprises a polysiloxane, the tacticity or crystallinity of a polymer to be obtained can be easily enhanced and further the fine powder of a formed polymer can be easily reduced when polymerizing olefins.

A polysiloxane, also known as a silicone oil, is a polymer with a siloxane bond (-Si-O-bond) in the main chain, has a viscosity at 25°C of 0.02 to 100.00 cm$^2$/s (2 to 10000 centistokes), and more preferably 0.03 to 5.00 cm$^2$/s (3 to 500 centistokes), and is in the form of a liquid or viscous chain, partially hydrogenated, cyclic or modified polysiloxane at an ambient temperature.

Examples of the chain polysiloxane include dimethyl polysiloxane and methyl phenyl polysiloxane, examples of the partially hydrogenated polysiloxane include methyl hydrogen polysiloxane having a hydrogenation rate of 10 to 80%, examples of the cyclic polysiloxane include one or more cyclic polysiloxanes selected from hexamethylcyclotrisiloxane, octamethylcyclotetrasiloxane, decamethylcyclopentasiloxane, 2,4,6-trimethylcyclotrisiloxane, and 2,4,6,8-tetramethylcyclotetrasiloxane.

It is preferable that the solid catalyst component for polymerization of an olefin according to the present invention be prepared by allowing the above dialkoxy magnesium, titanium halogen compound and succinic acid diester compound to contact in the presence of an inert organic solvent.

In the present invention, the above inert organic solvent preferably dissolves the titanium halogen compound and does not dissolve dialkoxy magnesium, and examples specifically include one or more compounds selected from saturated hydrocarbon compounds such as pentane, hexane, heptane, octane, nonane, decane, cyclohexane, methylcyclohexane, ethylcyclohexane, 1,2-diethylcyclohexane, methylcyclohexene, decalin, and a mineral oil, aromatic hydrocarbon compounds such as benzene, toluene, xylene, and ethylbenzene, and halogenated hydrocarbon compounds such as orthodichlorobenzene, methylene chloride, 1,2-dichlorobenzene, carbon tetrachloride, and dichloroethane.

For the above inert organic solvent, preferably used are saturated hydrocarbon compounds or aromatic hydrocarbon compounds which are in the form of a liquid at an ambient temperature with a boiling point of about 50 to 200°C, of which one or more compounds selected from hexane, heptane, octane, ethylcyclohexane, a mineral oil, toluene, xylene, and ethylbenzene, with one or more compounds selected from hexane, heptane, ethylcyclohexane, and toluene being particularly preferable.

In the solid catalyst component for polymerization of an olefin according to the present invention, magnesium, titanium, halogen, the 1,3-diether compound not having a fluorene structure, and the succinic acid diester compound can be contained in the respective desired amounts as long as the total content of the 1,3-diether compound not having a fluorene structure and succinic acid diester compound described above, the molar ratio represented by the content (molar amount) of the succinic acid diester compound/the content (molar amount) of the titanium described above, and the molar ratio represented by the 1,3-diether compound not having a fluorene structure (molar amount)/the succinic acid diester compound (molar amount) satisfy the above requirements.

The solid catalyst component for polymerization of an olefin according to the present invention comprises titanium, in terms of the atomic weight, in preferably 3.0 to 6.0% by mass, more preferably 3.5 to 6.0% by mass, and further preferably 4.0 to 6.0% by mass.

The solid catalyst component for polymerization of an olefin according to the present invention comprises magnesium, in terms of the atomic weight, in preferably 15.0 to 25.0% by mass, more preferably 16.0 to 23.0% by mass, further preferably 17.0 to 22.0% by mass, and much more preferably 18.0 to 21.0% by mass.

The solid catalyst component for polymerization of an olefin according to the present invention comprises halogen, in terms of the atomic weight, in preferably 50.0 to 70.0% by mass, more preferably 55.0 to 68.0% by mass, further preferably 58.0 to 67.0% by mass, and much more preferably 60.0 to 66.0% by mass.

In the present application document, the content rate of titanium in the solid catalyst component for polymerization of an olefin means the value measured in conformity with the method (oxidation-reduction titration) described in JIS 8311-1997 "Method for determination of titanium in titanium ores".

Further, in the present application document, the content percentage of magnesium in the solid catalyst component for polymerization of an olefin means the value measured by the EDTA titration method in which the solid catalyst component for polymerization of an olefin is dissolved in a hydrochloric acid solution and titrated with an EDTA solution.

Additionally, in the present application document, the content of halogen in the solid catalyst component for polymerization of an olefin means the value measured by the silver nitrate titration in which the solid catalyst component is treated in a mixed solution of sulfuric acid and pure water to form an aqueous solution, then a predetermined amount of which is separated to titrate halogen with a silver nitrate standard solution.

Further, in the present application document, the content ratio of the 1,3-diether compound not having a fluorene structure, the succinic acid diester compound and the content ratio of other internal electron-donating compounds added as needed in the solid catalyst component for polymerization of an olefin mean the values obtained by hydrolyzing the solid catalyst component for polymerization of an olefin, then extracting the 1,3-diether compound not having a fluorene structure, the succinic acid diester compound and other internal electron-donating compounds added as needed using an aromatic solvent, and measuring this solution by the gas chromatography FID (Flame Ionization Detector) method.

The solid catalyst component for polymerization of an olefin according to the present invention can be preferably produced by the method for producing a solid catalyst component for polymerization of an olefin according to the present invention to be described below.

Next, the method for producing a solid catalyst component for polymerization of an olefin according to the present invention will be described.

The method for producing the solid catalyst component for polymerization of an olefin according to the present invention is

a method for producing the solid catalyst component for polymerization of an olefin by allowing a dialkoxy magnesium, a titanium halogen compound, a 1,3-diether compound not having a fluorene structure, and a succinic acid diester compound to mutually contact,
wherein the titanium halogen compound is allowed to contact the dialkoxy magnesium multiple times, of which when the titanium halogen compound is allowed to contact the dialkoxy magnesium for the first time, a contact amount of the titanium halogen compound per 1.0 mol of the dialkoxy magnesium is 1.5 to 10.0 mol,
a total amount of the titanium halogen compound used per 1.0 mol of the dialkoxy magnesium is 5.0 to 18.0 mol,
a sum of a molar amount of the 1,3-diether compound not having a fluorene structure used and a molar amount of the succinic acid diester compound used per 1.0 mol of the dialkoxy magnesium is 0.10 to 0.20 mol,
a molar ratio (S/T), represented by a molar amount of the succinic acid diester compound used (S) to a total molar amount of the titanium halogen compound used (T), is 0.020 to 0.040,

a molar ratio (E/S), represented by a molar amount of the 1,3-diether compound not having a fluorene structure used (E) to the molar amount of the succinic acid diester compound used (S), is 0.50 or less, and

the dialkoxy magnesium is composed of secondary particles that are assemblies of primary particles having an average particle diameter of less than 2 μm, has a specific surface area of 10 m$^2$/g or more and less than 50 m$^2$/g, and has a particle size distribution index (SPAN) of 1.30 or less.

The dialkoxy magnesium used in the method for producing the solid catalyst component for polymerization of an olefin according to the present invention is the same as the dialkoxy magnesium described above in the solid catalyst component for polymerization of an olefin according to the present invention.

The dialkoxy magnesium used in the method for producing the solid catalyst component for polymerization of an olefin according to the present invention is composed of secondary particles that are assemblies of primary particles having an average particle diameter of less than 2 μm. Also, the dialkoxy magnesium used in the method for producing the solid catalyst component for polymerization of an olefin according to the present invention has a specific surface area of 10 m$^2$/g or more and less than 50 m$^2$/g, preferably 10 to 50 m$^2$/g, and more preferably 10 to 40 m$^2$/g. In addition, the dialkoxy magnesium used in the method for producing the solid catalyst component for polymerization of an olefin according to the present invention has a particle size distribution index (SPAN) of 1.30 or less, preferably 0.60 to 1.00, and more preferably 0.70 to 0.90.

The 1,3-diether compound not having a fluorene structure and succinic acid diester compound used in the method for producing the solid catalyst component for polymerization of an olefin according to the present invention are the same as the 1,3-diether compound not having a fluorene structure and succinic acid diester compound described above in the solid catalyst component for polymerization of an olefin according to the present invention.

In the method for producing the solid catalyst component for polymerization of an olefin according to the present invention, when the titanium halogen compound is allowed to contact the dialkoxy magnesium multiple times, of which when the titanium halogen halogen compound is allowed to contact the dialkoxy magnesium for the first time, 1.5 to 10.0 mol, preferably 2.0 to 8.0 mol, of the titanium halogen compound per 1.0 mol of the dialkoxy magnesium is used, and the total amount of the titanium halogen compound used per 1.0 mol of the dialkoxy magnesium is 5.0 to 18.0 mol, the total amount of the titanium halogen compound used per 1.0 mol of the dialkoxy magnesium is preferably 5.0 to 15.0 mol, and the total amount of the titanium halogen compound used per 1.0 mol of the dialkoxy magnesium is more preferably 5.0 to 12.0 mol.

In the method for producing the solid catalyst component for polymerization of an olefin according to the present invention, when the titanium halogen halogen compound is allowed to contact the dialkoxy magnesium for the first time, by controlling the amount of the titanium halogen compound used to the dialkoxy magnesium within the above range, a solid catalyst component for polymerization of an olefin achieving high activity can be prepared with a small amount of the titanium halogen compound.

In the method for producing the solid catalyst component for polymerization of an olefin according to the present invention, by controlling the total amount of the titanium compound used per 1.0 mol of the dialkoxy magnesium within the above range, a solid catalyst component for polymerization of an olefin achieving high activity can be prepared with a small amount of the titanium halogen compound.

In the method for producing the solid catalyst component for polymerization of an olefin according to the present invention, 0.08 to 0.16 mol of the succinic acid diester compound per 1.0 mol of the dialkoxy magnesium is preferably used, 0.09 to 0.15 mol of the succinic acid diester compound per 1.0 mol of the dialkoxy magnesium is more preferably used, and 0.10 to 0.14 mol of the succinic acid diester compound per 1.0 mol of the dialkoxy magnesium is still more preferably used.

In the method for producing the solid catalyst component for polymerization of an olefin according to the present invention, by controlling the amount of the succinic acid diester compound used per 1.0 mol of the dialkoxy magnesium within the above range, the succinic acid diester compound can be sufficiently supported, while inhibiting excess support of the titanium halogen compound on the carrier.

In the method for producing the solid catalyst component for polymerization of an olefin according to the present invention, the sum of the molar amount of the 1,3-diether compound not having a fluorene structure used and the molar amount of the succinic acid diester compound used per 1.0 mol of the dialkoxy magnesium is 0.10 to 0.20 mol, and the sum of the molar amount of the 1,3-diether compound not having a fluorene structure used and the molar amount of the succinic acid diester compound used per 1.0 mol of the dialkoxy magnesium is preferably 0.12 to 0.18 mol.

In the method for producing the solid catalyst component for polymerization of an olefin according to the present invention, by controlling the sum of the molar amount of the 1,3-diether compound not having a fluorene structure used and the molar amount of the succinic acid diester compound used per 1.0 mol of the dialkoxy magnesium within the above range, the 1,3-diether compound and the succinic acid diester compound can be sufficiently supported, while inhibiting excess support of the titanium halogen compound on the carrier.

In the method for producing the solid catalyst component for polymerization of an olefin according to the present invention, the molar ratio (S/T), represented by the molar amount of the succinic acid diester compound used (S) to the total molar amount of the titanium halogen compound used (T), is 0.020 to 0.040, preferably 0.022 to 0.030, and more preferably 0.024 to 0.030.

In the method for producing the solid catalyst component for polymerization of an olefin according to the present invention, by controlling the molar ratio (S/T), represented by the molar amount of the succinic acid diester compound used (S) to the total molar amount of the titanium halogen compound used (T), within the above range, the 1,3-diether compound and the succinic acid diester compound can be sufficiently supported, while inhibiting excess support of the titanium halogen compound on the carrier.

In the method for producing the solid catalyst component for polymerization of an olefin according to the present invention, the molar ratio (E/S), represented by the molar amount of the 1,3-diether compound not having a fluorene structure used (E) to the molar amount of the succinic acid diester compound used (S), is 0.50 or less, preferably 0.10 to 0.40, and more preferably 0.20 to 0.40.

In the method for producing the solid catalyst component for polymerization of an olefin according to the present invention, by controlling the molar ratio (E/S), represented by the molar amount of the 1,3-diether compound not having a fluorene structure used (E) to the molar amount of the succinic acid diester compound used (S), within the above range, the 1,3-diether compound and the succinic acid diester compound can be sufficiently supported, while inhibiting excess support of the titanium halogen compound on the carrier.

Examples of the method for producing the solid catalyst component for polymerization of an olefin according to the present invention include, more specifically, a method in which the dialkoxy magnesium, the titanium halogen compound, the 1,3-diether compound not having a fluorene structure, and the succinic acid diester compound are suspended in an inert hydrocarbon solvent and allowed to contact while heating for a predetermined time, and then the titanium halogen compound is further added to the obtained suspension and allowed to contact while heating to obtain a solid product, and the solid product is washed with a hydrocarbon solvent thereby to obtain the intended solid catalyst component for polymerization of an olefin.

The above inert organic solvent is preferably in the form of a liquid at an ambient temperature (20°C) with a boiling point of 50 to 150°C, and more preferably an aromatic hydrocarbon compound or a saturated hydrocarbon compound which is in the form of a liquid at an ambient temperature with a boiling point of 50 to 150°C.

Examples of the above inert organic solvent specifically include one or more solvents selected from straight chain aliphatic hydrocarbon compounds such as hexane, heptane, and decane, branched chain aliphatic hydrocarbon compounds such as methylheptane, alicyclic hydrocarbon compounds such as cyclohexane, methylcyclohexane, and ethylcyclohexane, and aromatic hydrocarbon compounds such as toluene, xylene, and ethylbenzene.

Of the above inert organic solvents, aromatic hydrocarbon compounds which are in the form of a liquid at an ambient temperature with a boiling point of 50 to 150°C are preferable because the activity of the solid catalyst component to be obtained is enhanced and the tacticity of a polymer to be obtained can be enhanced.

The above heating temperature is preferably 70 to 150°C, more preferably 80 to 120°C, and further preferably 90 to 115°C.

The above heating time is preferably 30 to 240 minutes, more preferably 60 to 180 minutes, and further preferably 60 to 120 minutes.

The number of times the titanium halogen compound is added to the above suspension is not particularly limited.

When the titanium halogen compound is added multiple times to the above suspension, heating temperature at each time addition may be adjusted to be within the above range, and heating time at each addition may be adjusted to be within the above range.

In the method for producing the solid catalyst component for polymerization of an olefin of the present invention, examples of the timing at which the succinic acid diester compound is allowed to contact the dialkoxy magnesium include before the titanium halogen compound is allowed to contact the dialkoxy magnesium for the first time, after the titanium halogen compound is allowed to contact the dialkoxy magnesium for the first time, before or after the titanium halogen compound is allowed to contact multiple times, and before the solid product is washed with a hydrocarbon solvent. Then, in the method for producing the solid catalyst component for polymerization of an olefin of the present invention, as for the timing at which the succinic acid diester compound is allowed to contact the dialkoxy magnesium, after the titanium halogen compound is allowed to contact the dialkoxy magnesium for the first time is preferable in that the succinic acid diester compound can be sufficiently supported, while inhibiting particle aggregation between the carriers.

In the method for producing the solid catalyst component for polymerization of an olefin of the present invention, examples of the timing at which the 1,3-diether compound not having a fluorene structure is allowed to contact the dialkoxy magnesium include before the titanium halogen compound is allowed to contact the dialkoxy magnesium for the first time, after the titanium halogen compound is allowed to contact the dialkoxy magnesium for the first time, before or after the titanium halogen compound is allowed to contact multiple times, and before the solid product is washed with a hydrocarbon solvent. Then, in the method for producing the solid catalyst component for polymerization of an olefin of the present invention, as for the timing at which the 1,3-diether compound not having a fluorene structure is allowed to contact the dialkoxy magnesium, after the titanium halogen compound is allowed to contact the dialkoxy magnesium for the first time is preferable in that the 1,3-diether compound is sufficiently supported, while inhibiting particle aggregation between the carriers.

Also, in the method for producing the solid catalyst component for polymerization of an olefin of the present invention, the 1,3-diether compound not having a fluorene structure may be allowed to contact the dialkoxy magnesium together with the succinic acid diester compound, or the succinic acid diester compound may first be allowed to contact the dialkoxy magnesium, followed by allowing the 1,3-diether compound not having a fluorene structure to contact. Then, in the method for producing the solid catalyst component for polymerization of an olefin of the present invention, it is preferable that, after the succinic acid diester compound is allowed to contact the dialkoxy magnesium first, the 1,3-diether compound not having a fluorene structure is allowed to contact, in that the succinic acid diester compound can be sufficiently supported, while inhibiting excess support of the 1,3-diether on the carrier.

In the above preparation method, other internal electron-donating compounds may be used in combination with the succinic acid diester compound. Further, the above contact may also be carried out in the copresence of other reaction reagents such as silicon, phosphorus, and aluminum, and surfactants.

In the production method of the solid catalyst component for polymerization of an olefin according to the present invention, preferable aspects of the solid catalyst component for polymerization of an olefin to be obtained are as described above in the solid catalyst component for polymerization of an olefin according to the present invention.

Next, the catalyst for polymerization of an olefin according to the present invention will be described.

The catalyst for polymerization of an olefin according to the present invention comprises:

(I) the solid catalyst component for polymerization of an olefin according to the present invention, and
(II) an organoaluminum compound represented by the following formula (3):

$$R^9_p AlQ_{3-p} \qquad (3)$$

wherein $R^9$ is an alkyl group having 1 to 6 carbon atoms, Q is a hydrogen atom or halogen, and p satisfies $0 < p \leq 3$, wherein when more than one $R^9$ are present, each $R^5$ may be the same as or different from each other, and when more than one Q are present, each Q may be the same or different.

The catalyst for polymerization of an olefin according to the present invention preferably comprises:

(I) the solid catalyst component for polymerization of an olefin according to the present invention,
(II) an organoaluminum compound represented by the following formula (3):

$$R^9_p AlQ_{3-p} \qquad (3)$$

wherein $R^9$ is an alkyl group having 1 to 6 carbon atoms, Q is a hydrogen atom or halogen atom, and p satisfies $0 < p \leq 3$, wherein when more than one $R^9$ are present, each $R^5$ may be the same as or different from each other, and when more than one Q are present, each Q may be the same or different, and
(III) an external electron-donating compound.

Details of (I) the solid catalyst component for polymerization of an olefin according to the present invention composing the catalyst for polymerization of an olefin according to the present invention are as described above.

In the catalyst for polymerization of an olefin according to the present invention, (II) the organoaluminum compound is represented by the following formula (3):

$$R^9_p AlQ_{3-p} \qquad (3)$$

wherein $R^9$ is an alkyl group having 1 to 6 carbon atoms, Q is a hydrogen atom or halogen atom, and p satisfies $0 < p \leq 3$, wherein when more than one $R^9$ are present, each $R^5$ may be the same as or different from each other, and when more than one Q are present, each Q may be the same or different.

In the compound represented by the following formula (3), p satisfies $0 < p \leq 3$ and, specifically, p is 1, 2 or 3.

Specific examples of such (II) the organoaluminum compound include one or more compounds selected from trialkyl aluminum such as triethylaluminum, triisopropyl aluminum, tri-n-butylaluminum, tri-n-hexylaluminum, and triisobutylaluminum, halogenated alkyl aluminum such as diethylaluminum chloride, and diethylaluminum bromide, and diethylaluminum halide, preferably one or more compounds selected from halogenated alkyl aluminum such as diethylaluminum chloride, and trialkyl aluminum such as triethylaluminum, tri-n-butylaluminum, and triisobutylaluminum, and more preferably one or more compounds selected from triethylaluminum and triisobutylaluminum.

Examples of (III) the external electron-donating compound composing the catalyst for polymerization of an olefin of the present invention include compounds represented by the following formula (5)

$$R^{11}_r Si(NR^{12}R^{13})_s(OR^{14})_{4-(r+s)} \qquad (5)$$

wherein, r is 0 or 1 to 2, s is 0 or 1 to 2, r + s is 0 or 1 to 4, $R^{11}$, $R^{12}$ or $R^{13}$ is a hydrogen atom or any of the groups selected from a straight chain or a branched chain alkyl group having 1 to 12 carbon atoms, a substituted or unsubstituted cycloalkyl group, a phenyl group, an allyl group, and an aralkyl group, may contain a heteroatom, and may be the same as or different from each other. $R^{12}$ and $R^{13}$ may bond to form a ring, $R^{11}$, $R^{12}$ and $R^{13}$ may be the same or different. $R^{14}$ is any of the groups selected from an alkyl group having 1 to 4 carbon atoms, a cycloalkyl group, a phenyl group, a vinyl group, an allyl group, and an aralkyl group, and may contain a heteroatom.

In the compound represented by the following formula (5), $R^{11}$ is a hydrogen atom or any of the groups selected from a straight chain or a branched chain alkyl group having 1 to 12 carbon atoms, a substituted or unsubstituted cycloalkyl group, a phenyl group, an allyl group, and an aralkyl group, and may contain a heteroatom.

$R^{11}$ is preferably a straight chain or a branched chain alkyl group having 1 to 10 carbon atoms or a cycloalkyl group having 5 to 8 carbon atoms, and particularly preferably a straight chain or a branched chain alkyl group having 1 to 8 carbon atoms or a cycloalkyl group having 5 to 8 carbon atoms.

In the compound represented by the following formula (5), $R^{12}$ or $R^{13}$ is a hydrogen atom or any of the groups selected from a straight chain or a branched chain alkyl group having 1 to 12 carbon atoms, a substituted or unsubstituted cycloalkyl group, a phenyl group, an allyl group, and an aralkyl group, and may contain a heteroatom.

$R^{12}$ or $R^{13}$ is preferably a straight chain or a branched chain alkyl group having 1 to 10 carbon atoms or a cycloalkyl group having 5 to 8 carbon atoms, and particularly preferably a straight chain or a branched chain alkyl group having 1 to 8 carbon atoms or a cycloalkyl group having 5 to 8 carbon atoms.

$R^{12}$ or $R^{13}$ may bond to form a ring, and in such a case $(NR^{12}$ or $R^{13})$ forming a ring is preferably a perhydroquinolino group and a perhydroisoquinolino group.

In the compound represented by the following formula (5), $R^{11}$, $R^{12}$ and $R^{13}$ are the same or different.

In the compound represented by the following formula (5), $R^{14}$ is any of the groups selected from an alkyl group having 1 to 4 carbon atoms, a cycloalkyl group, a phenyl group, an allyl group, and an aralkyl group, and may contain a heteroatom.

$R^{14}$ is preferably a straight chain or a branched chain alkyl group having 1 to 4 carbon atoms.

In the compound represented by the following formula (5), r is 0 or 1 to 2, and specifically, r is 0, 1 or 2.

In the compound represented by the following formula (5), s is 0 or 1 to 2, and specifically, s is 0, 1 or 2.

In the compound represented by the following formula (5), r + s is 0 or 1 to 4, and specifically, r + s is 0, 1, 2, 3 or 4.

Examples of the compounds represented by the above formula (5) specifically include one or more organosilicon compounds selected from phenyl alkoxysilane, alkyl alkoxysilane, phenylalkyl alkoxysilane, cycloalkyl alkoxysilane, cycloalkylalkyl alkoxysilane, (alkylamino)alkoxysilane, alkyl(alkylamino)alkoxysilane, alkyl(alkylamino)silane, and alkylaminosilane.

Examples of the compounds represented by the above formula (5) wherein s is 0 particularly preferably include one or more organosilicon compounds selected from di-n-propyl dimethoxysilane, diisopropyl dimethoxysilane, di-n-butyl dimethoxysilane, diisobutyl dimethoxysilane, di-t-butyl dimethoxysilane, t-butyl methyl dimethoxysilane, t-butyl ethyl dimethoxysilane, di-n-butyl diethoxysilane, t-butyl trimethoxysilane, t-butyl triethoxysilane, dicyclohexyl dimethoxysilane, dicyclohexyl diethoxysilane, cyclohexyl methyldimethoxysilane, cyclohexyl methyldiethoxysilane, cyclohexyl ethyldimethoxysilane, cyclohexyl ethyldiethoxysilane, dicyclopentyl dimethoxysilane, dicyclopentyl diethoxysilane, cyclopentyl methyldimethoxysilane, cyclopentyl methyldiethoxysilane, cyclopentyl ethyldiethoxysilane, cyclohexyl cyclopentyl dimethoxysilane, cyclohexyl cyclopentyl diethoxysilane, 3-methylcyclohexyl cyclopentyl dimethoxysilane, 4-methylcyclohexyl cyclopentyl dimethoxysilane, and 3,5-dimethylcyclohexyl cyclopentyl dimethoxysilane.

Examples of the compounds represented by the above formula (5) wherein s is 1 or 2 include one or more organosilicon compounds selected from di(alkylamino)dialkoxysilane, (alkylamino)(cycloalkylamino)dialkoxysilane, (alkylamino)(alkyl)dialkoxysilane, di(cycloalkylamino)dialkoxysilane, vinyl(alkylamino)dialkoxysilane, allyl(alkylamino)dialkoxysilane, (alkoxyamino)trialkoxysilane, (alkylamino)trialkoxysilane, and (cycloalkylamino)trialkoxysilane, examples of such compounds particularly preferably include ethyl(t-butylamino)dimethoxysilane, cyclohexyl(cyclohexylamino)dimethoxysilane, ethyl(t-butylamino)dimethoxysilane, bis(cyclohexylamino)dimethoxysilane, bis(perhydroisoquinolino)dimethoxysilane, bis(perhydroquinolino)dimethoxysilane, ethyl(isoquinolino)dimethoxysilane, diethylamino trimethoxysilane, and diethylamino triethoxysilane, and particularly one or more organosilicon compounds selected from bis(perhydroisoquinolino)dimethoxysilane, diethylaminotrimethoxysilane, and diethylaminotriethoxysilane.

The compounds represented by the above formula (5) may be used in combination of two or more compounds.

The catalyst for polymerization of an olefin according to the present invention comprises (I) the solid catalyst component for polymerization of an olefin according to the present invention and (II) the organoaluminum compound represented by the formula (3), or comprises (I) the solid catalyst component for polymerization of an olefin according to the present invention, (II) the organoaluminum compound represented by the formula (3), and (III) the external electron-donating compound, that is, the contact product thereof.

The catalyst for polymerization of an olefin according to the present invention may be produced by allowing (I) the solid catalyst component for polymerization of an olefin according to the present invention, and (II) the organoaluminum compound represented by the formula (3), and optionally (III) the external electron-donating compound to contact in the absence of an olefin, or may be produced, as described hereinbelow, by allowing these components to contact in the presence of an olefin (in the polymerization system).

In the catalyst for polymerization of an olefin according to the present invention, the content ratio of each component can be any ratio unless the effects of the present invention are affected, and not particularly limited, but typically, such a catalyst comprises preferably 1 to 2000 mol, more preferably 50 to 1000 mol, of (II) the organoaluminum compound per mol of the titanium atom in (I) the solid catalyst component for polymerization of an olefin. Additionally, the catalyst for polymerization of an olefin according to the present invention comprises preferably 0.002 to 10.000 mol, more preferably 0.010 to 2.000 mol, further preferably 0.010 to 0.500 mol, of (III) the external electron-donating compound per mol of (II) the organoaluminum compound.

The present invention can accordingly provide the catalyst for polymerization of an olefin comprising an internal electron-donating compound other than phthalate esters, capable of easily producing a polymer of an olefin with an excellent melt flow rate and high rigidity. In addition, according to the present invention, it is possible to provide a solid catalyst for polymerization of an olefin that can further improve the particles of the catalyst and the copolymerization performance, in addition to achieving both the above-described excellent melt flow rate and high rigidity.

Next, the method for producing a polymer of an olefin according to the present invention will be described.

The method for producing a polymer of an olefin according to the present invention comprises polymerizing an olefin in the presence of the catalyst for polymerization of an olefin according to the present invention.

In the method for producing a polymer of an olefin according to the present invention, the polymerization of olefins may be homopolymerization, or copolymerization.

In the method for producing a polymer of an olefin according to the present invention, examples of olefins to be polymerized include one or more olefins selected from ethylene, propylene, 1-butene, 1-pentane, 4-methyl-1-pentane, and vinylcyclohexane, of which one or more olefins selected from ethylene, propylene, and 1-butene are preferable, with propylene being more preferable.

When the above olefin is propylene, homopolymerization of propylene may be acceptable, but copolymerization with another $\alpha$-olefin may also be acceptable.

Examples of olefins to be copolymerizable with propylene include one or more olefins selected from ethylene, 1-butene, 1-pentane, 4-methyl-1-pentane, and vinylcyclohexane.

When the catalyst for polymerization of an olefin according to the present invention is prepared in the presence of olefins (in the polymerization system), the ratio of amounts of each component used can be any ratio unless the effects of the present invention are not affected, and not particularly limited, but typically, preferably 1 to 2000 mol, more preferably 50 to 1000 mol, of (II) the organoaluminum compound described above is allowed to contact per mol of the titanium atom in (I) the solid catalyst component for polymerization of an olefin. Additionally, preferably 0.002 to 10.000 mol, more preferably 0.010 to 2.000 mol, and further preferably 0.010 to 0.500 mol, of (III) the external electron-donating compound described above is allowed to contact per mol of (II) the organoaluminum compound described above.

The contact order of each component composing the above catalyst for polymerization of an olefin can be any order, but it is desirable that (II) the organoaluminum compound is first charged in the polymerization system, and when (III) the external electron-donating compound is used, (III) the external electron-donating compound is subsequently charged and allowed to contact, and then (I) the solid catalyst component for polymerization of an olefin described above is charged and allowed to contact.

The method for producing a polymer of an olefin according to the present invention can be carried out in the presence or absence of an organic solvent.

Olefin monomers such as propylene can be used in the form forms of a gas and a liquid. The polymerization temperature is preferably 200°C or less, and more preferably 100°C or less, and the polymerization pressure is preferably 10 MPa or less, and more preferably 5 MPa or less. The polymerization of olefins can be either the continuous polymerization method or the batch polymerization method. The polymerization reaction can be carried out in single stage, or can be carried out in two or more stages.

In addition, when polymerizing an olefin using the catalyst for polymerization of an olefin according to the present invention (also called the primary polymerization), the preliminary polymerization is preferably carried out prior to the primary polymerization for even more improving the catalytic activity, tacticity, particle properties and the like of a polymer to be formed, and for the preliminary polymerization, the same olefins or monomers such as styrene as used in the primary polymerization can be used.

When performing the preliminary polymerization, the contact order of each component and monomers (olefins) composing the catalyst for polymerization of an olefin can be any order, but preferably, (II) the organoaluminum compound is first charged in the preliminary polymerization system in which an inert gas atmosphere or an olefin gas atmosphere is set, subsequently (I) the solid catalyst component for polymerization of an olefin according to the present invention is charged and allowed to contact, and then an olefin such as propylene singly, or a mixture of one or more olefins such as propylene and another olefin, is allowed to contact.

In the preliminary polymerization described above, when (III) the external electron-donating compound is further charged in the preliminary polymerization system, it is preferable that (II) the organoaluminum compound is first charged in the preliminary polymerization system in which an inert gas atmosphere or an olefin gas atmosphere is set, subsequently (III) the external electron-donating compound is charged and allowed to contact, (I) the solid catalyst component for polymerization of an olefin according to the present invention is further allowed to contact, and then the olefin such as propylene alone, or a mixture of the olefin such as propylene and one or more other olefins, is allowed to contact.

In the method for producing a polymer of an olefin according to the present invention, examples of the polymerization method include the slurry polymerization method in which a solvent of an inert hydrocarbon compound such as cyclohexane and heptane is used, the bulk polymerization method in which a solvent such as liquefied propylene is used, and the gas phase polymerization method in which no solvent is substantially used, with the bulk polymerization method and the gas phase polymerization method being preferable.

When the copolymerization of propylene and a monomer of another $\alpha$-olefin is performed, the representative copolymerization includes the random copolymerization in which the polymerization is carried out in a single stage using propylene and a small amount of ethylene as a comonomer, and the so-called propylene-ethylene block copolymerization in which the homopolymerization of propylene is carried out in the first stage (the first polymerization vessel) and the copolymerization of propylene and another $\alpha$-olefin such as ethylene is carried out in the second stage (the second polymerization vessel) or in the multistages of more than that (multistage polymerization vessels), with the block copolymerization of propylene and another $\alpha$-olefin being preferable.

The block copolymer to be obtained by the block copolymerization is the polymer comprising a segment in which 2 or more monomer compositions continuously change, and refers to those in the form wherein 2 or more polymer chains (segments) with different polymer primary structures in a molecular chain are connected such as monomer species, comonomer species, comonomer composition, comonomer content, comonomer sequence, tacticity, and the like.

In the method for producing a polymer of an olefin according to the present invention, the block copolymerization reaction of propylene and another $\alpha$-olefin can be typically carried out, in the presence of the catalyst for polymerization of an olefin according to the present invention, by allowing propylene singly or propylene and a small amount of $\alpha$-olefin (ethylene or the like) to contact in a former stage, and subsequently allowing propylene and $\alpha$-olefin (ethylene or the like) to contact in a later stage. The polymerization reaction of the above former stage may be repeatedly carried out multiple times, or the polymerization reaction of the above later stage may be repeatedly carried out multiple times in the multistage reaction.

The block copolymerization reaction of propylene and another $\alpha$-olefin is specifically carried out preferably by polymerizing at an adjusted polymerization temperature and time so that a percentage of the polypropylene part (in the final copolymer to be obtained) in the former stage is 20 to 90% by mass, and polymerizing by introducing propylene and ethylene or another $\alpha$-olefin so that the rubber part percentage such as ethylenepropylene rubber (EPR) (in the final copolymer to be obtained) is 10 to 80% by mass in the subsequent later stage.

The polymerization temperature in both former stage and later stage is preferably 200°C or less, more preferably 100°C or less, further preferably 65°C to 80°C, and much more preferably 75 to 80°C, and the polymerization pressure is preferably 10 MPa or less, more preferably 6 MPa or less, and further preferably 5 MPa or less.

The above copolymerization reaction can also employ any of the continuous polymerization method and the batch polymerization method, and the polymerization reaction can be carried out in a single stage, or can be carried out in two or more stages.

Additionally, the polymerization time (residence time in a reactor) is preferably 1 min to 5 hours at respective polymerization stages at the former stage or later stage polymerization, or also at the continuous polymerization.

Examples of the polymerization method include the slurry polymerization method in which a solvent of an inert hydrocarbon compound such as cyclohexane and heptane is used, the bulk polymerization method in which a solvent such as liquefied propylene is used, and the gas phase polymerization method in which no solvent is substantially used, with the bulk polymerization method and the gas phase polymerization method being preferable.

The ethylene·propylene block copolymer contains the EP component (the copolymer component of ethylene and propylene), and the EPR component discharged onto the particle surface of the polymer causes particle stickiness (adhesiveness), thereby resulting in poor flowability. The deterioration of particle flowability in the polymer production facility causes the plant operability to be reduced, whereby it is desired to select a method for producing a polymer that is capable of inhibiting the EPR component from discharging onto the particle surface.

The present invention can accordingly provide the method capable of easily producing the polymer of an olefin with an excellent melt flow rate and high rigidity.

Next, the polymer of an olefin according to the present invention will be described.

The polymer of an olefin according to the present invention has:

(a) a melt flow rate of 0.5 to 200 g/10 min,
(b) a flexural modulus of 1900 MPa or more, and
(c) molecular weight distributions of Mw/Mn $\geq$ 6.0 and Mz/Mw $\geq$ 4.0.

In the polymer of an olefin according to the present invention, the melt flow rate (MFR) indicating the melt flow rate of the polymer of an olefin is 0.5 to 200 g/10 min, preferably 10 to 160 g/10 min.

In the polymer of an olefin according to the present invention, when a melt flow rate (MFR) is in the above range, practically sufficient formability can be easily demonstrated.

In the present application document, the melt flow rate (MFR) means the value measured in conformity with ASTM D 1238, JIS K 7210.

The polymer of an olefin according to the present invention has a flexural modulus (FM) of 1900 MPa or more, preferably 2000 to 2300 MPa, and more preferably 2000 to 2200 MPa.

Since the polymer of an olefin according to the present invention has a flexural modulus (FM) within the above range, it has excellent moldability, and high rigidity can also be demonstrated.

In the present application document, the flexural modulus (FM) of the polymer of an olefin means the value (unit is MPa) measured at a measurement atmosphere temperature of 23°C in conformity with JIS K7171, using an injection molding test piece having a thickness of 4.0 mm, a width of 10.0 mm, and a length of 80.0 mm and created using NEX30III3EG, a product of NISSEI PLASTIC INDUSTRIAL CO., LTD., under the conditions at a molding temperature of 200°C and a mold temperature of 40°C.

The polymer of an olefin according to the present invention satisfying the requirements of the above melt flow rate and the flexural modulus has practically sufficient flowability, thereby having excellent moldability and easily demonstrating excellent rigidity.

The polymer of an olefin according to the present invention has a xylene soluble content (c-XS) of 3.0% or less, preferably 2.5% or less, and more preferably 2.0% or less.

In the polymer of an olefin according to the present invention, by the xylene soluble content (c-XS) being within the above range, the amount of low molecular weight polymers is small, and for this reason, polypropylene achieving both a high melt flow rate and high rigidity can be produced without the low molecular weight polymers adversely affecting the physical properties and moldability of the polymer.

In the present application document, the xylene soluble content (c-XS) of the polymer of an olefin is a value measured by the following operation. A flask equipped with a stirrer is charged with 4.0 g of the polymer (polypropylene) and 200 mL of p-xylene. The external temperature is raised until it becomes equal to the boiling point of xylene (about 150°C), and the polymer is dissolved for 2 hours while maintaining the p-xylene in the flask at the temperature under the boiling conditions (137 to 138°C). This solution is cooled to 23°C over 1 hour, and the insoluble components and the soluble components are separated by filtration. The solution of the soluble components is collected, and the p-xylene is evaporated by heating under reduced pressure (drying). The weight of the residue is calculated, and the relative ratio (% by mass) to the polymer (polypropylene) is calculated to determine the amount of the xylene soluble components (XS).

The polymer of an olefin according to the present invention has a molecular weight distribution (Mw/Mn) of 6.0 or more, preferably 6.5 to 15.0, and more preferably 7.0 to 10.0.

In addition, the polymer of an olefin according to the present invention has a molecular weight distribution represented by Mz/Mw, which is the ratio of the Z average molecular weight Mz to the mass average molecular weight Mw, of 4.0 or more, preferably 4.0 to 8.0, and more preferably 4.5 to 6.0.

In the polymer of an olefin according to the present invention, by the molecular weight distributions Mw/Mn and Mz/Mw being within the above ranges, it is a polymer of an olefin with excellent rigidity that contains a large amount of polymers having a very high molecular weight therein.

In the present application document, the molecular weight of the polymer of an olefin is a value in terms of styrene as measured by gel permeation chromatography (GPC) .

The polymer of an olefin according to the present invention, when molded to an injection molded plate, has a percentage of the oriented layers at the cross section of the injection molded plate of preferably 20% or more, more preferably 20 to 50%, and further preferably 25 to 40%.

The polymer of an olefin according to the present invention, when molded to an injection molded plate, has a percentage of the oriented layers at the cross section of the injection molded plate satisfying the above requirements. For this reason, the plate with thicker oriented layers and an excellent flexural modulus can be easily provided.

In the present application document, the percentage of the oriented layers at the cross section of an injection molded plate made of the polymer of an olefin means the value measured by the following methods.

1. Formation of a molded product

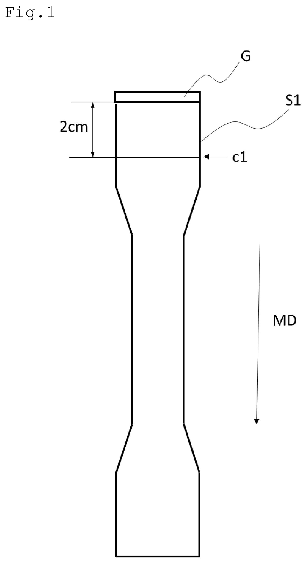

Injection molding of the polymer of an olefin is carried out under the following conditions in conformity with JIS K 7152-1 and JIS K 6921-2 thereby to obtain a molded product having the external shape shown in Figure 1.

Apparatus: NEX-III-3EG, a product of NISSEI PLASTIC INDUSTRIAL CO., LTD.
Type of test piece: Multipurpose test piece type AI described in JIS K 7139
Melting temperature of resin: 200°C
Mold temperature: 40°C
Injection velocity: 180 mm/sec
Dwelling pressure: 50 MPa-40 sec

2. Creation of a measurement specimen (Thin specimen for polarized optical microscope observation)

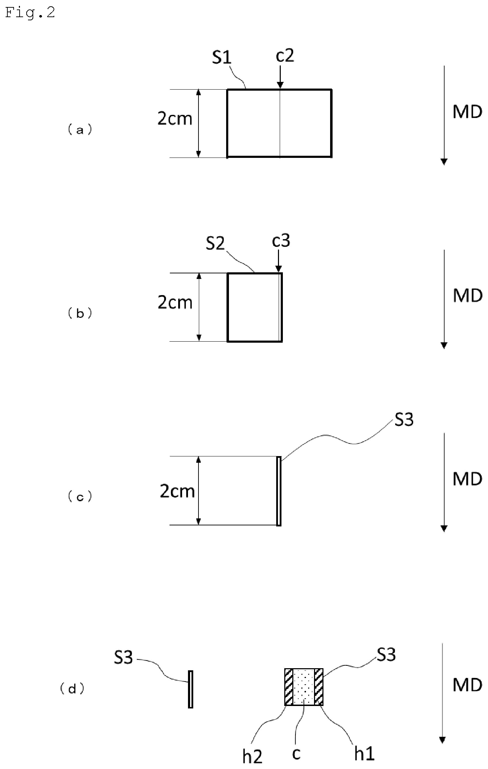

(1) As shown in Figure 1, the obtained molded product is cut in a direction perpendicular to the resin machine direction MD at a position c1, which is located at a distance of about 2 cm from a gate G in the resin machine direction MD, thereby to obtain a cut product S1 shown in Figure 2(a).
(2) As shown in Figure 2(a), the cut product S1 obtained in (1) is cut at the center part (location c2) parallel to the resin machine direction MD to obtain a cut product S2 shown in Figure 2(b).
(3) As shown in Figure 2(b), the cut product S2 is cut out at a location c3 using a rotary microtome (a product of YAMATO KOHKI INDUSTRIAL CO., LTD., RX-860) parallel to the resin machine direction MD to a thickness of 30 $\mu$m to obtain a thin measurement specimen S3 shown in Figure 2(c).
(4) Figure 2(d) is schematic drawings showing the obtained thin measurement specimen S3, the drawing on the left of Figure 2(d) is a side view of the thin measurement specimen S3 corresponding to Figure 2(c), and the drawing on the right of figure 2(d) is a front view of the thin measurement specimen S4.

3. Polarized optical microscope observation

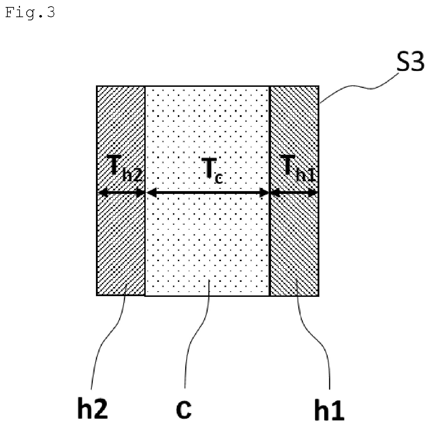

Figure 3 is an enlarged front view of the thin measurement specimen S3 shown on the right of Figure 2(d). The above measurement specimen S3 is observed using a polarized optical microscope (a product of NIKON Corporation, EPCLIPSE LV-100NDA) to specify a core layer c and oriented layers h1, h2. When the thickness of the core layer is Tc, the thickness of the oriented layers is Th1, Th2, the percentage F (%) of the oriented layers in the thickness of the molded layer is calculated based on the following equation (6).

$$F\ (\%)\ =\ ((Th1\ +\ Th2)/(Th1\ +\ Tc\ +\ Th2))\ \times\ 100 \qquad (6)$$

The thickness of the core layer Tc, and the thickness of the oriented layers Th1, Th2 employ each arithmetic average value when the thickness of the core layer c and the thickness of the oriented layers h1, h2 at any 10 points are measured.
In the case of the polymer of an olefin according to the present invention being a crystalline polymer, when the polymer melted for injection molding is poured into a mold, the polymer is poured into the mold under a high shear stress and cooled. For this reason, oriented crystallization is caused near the surface of the injection molded product to be obtained. When this injection molded product is thinly cut out using a microtome or the like and the cross section is observed under a polarized optical microscope, the oriented layers with high birefringence formed close to the surface and the core layer at the inner part can be confirmed in a clearly distinguishable state, thereby easily specifying the thickness of the above core layer Tc and the thickness of the oriented layers Th1, Th2.
When the polymer of an olefin according to the present invention is measured by cross fractionation chromatography at a measuring temperature of 40 to 140°C, the percentage of the total amount of the polymer of an olefin eluting at a measuring temperature of 120°C or more in the total amount of the polymer of an olefin to be measured is preferably 10% by mass or more and more preferably 20% by mass or more, and the content percentage of the polymer of an olefin having a molecular weight of 1,000,000 or more in the total amount of the polymer of an olefin eluting at a measuring temperature of 120°C or more is preferably 2% by mass or more and more preferably 3% by mass or more.
The polymer of an olefin according to the present invention can be easily produced by the method for producing a polymer of an olefin according to the present invention.
According to the present invention, the polymer of an olefin having an excellent melt flow rate, high rigidity, and a reduced amount of low molecular weight polymers can be provided.

[Examples]

Next, the present invention will be further described specifically in reference to examples, but these are simply examples and do not intend to limit the present invention.

(Example 1)

1. Synthesis of a solid catalyst component

2-Isopropyl-2-isopentyl-1,3-dimethoxypropane, which is a 1,3-diether compound not having a fluorene structure, and diethyl diisopropylsuccinate, which is a succinic acid diester compound, were employed as the internal electron-donating compounds, and a solid catalyst component for polymerization of an olefin was prepared by the following method.

(i) A flask having an internal volume of 500 mL, equipped with a stirrer and purged with a nitrogen gas was charged with 20 g (174.8 mmol) of diethoxy magnesium and 110.0 mL of toluene to form a suspension.
(ii) Subsequently, 40.0 mL (365 mmol) of titanium tetrachloride was added to obtain an initial contact product containing solution.
(iii) 6.0 mL (22.4 mmol) of diethyl diisopropylsuccinate was added while raising the temperature of the above initial contact product containing solution, and the temperature was further raised to 100°C to continue the reaction for 90 minutes while maintaining the same temperature. After completing the reaction, the supernatant was removed, the first contact product, which is the reaction product, was washed 4 times with 105 mL of toluene at 90°C.
(iv) Then, 60 mL (547 mmol) of titanium tetrachloride was added to the above first contact product, and during temperature elevation, 1.4 ml (5.6 mmol) of 2-isopropyl-2-isopentyl-1,3-dimethoxypropane was added, and the temperature was further raised to 115°C to continue the reaction for 60 minutes. After completing the reaction, the operation of removing the supernatant was carried out, and the second contact product, which is the reaction product, was washed twice with 105 mL of toluene at 90°C thereby to obtain the final contact product.

Subsequently, the obtained final contact product was washed 6 times with 100 mL of n-heptane at 40°C, the solid and liquid were separated thereby to obtain the solid catalyst component (the solid catalyst component for polymerization of an olefin).
The solid and liquid of the obtained solid catalyst component were separated, and the titanium content, the content of the 1,3-diether, and the content of the succinic acid diester compound in the obtained solid content were measured and found to be 3.2% by mass, 3.3% by mass, and 15.8% by mass, respectively. Also, the sum of the content of the 1,3-diether and the content of the succinic acid diester compound was 19.1% by mass. In addition, the ratio represented by the content of the succinic acid diester compound/the content of the titanium was 0.92 in a molar ratio. Moreover, the ratio represented by the content of the 1,3-diether/the content of the succinic acid diester compound was 0.25 in a molar ratio. Furthermore, the solid catalyst component was found to have a total pore volume of a diameter of 1 $\mu$m or less as measured by a mercury intrusion method of 0.4 cm$^3$/g and a specific surface area of 330 m$^2$/g.
Table 1 to Table 3 show the properties of the obtained solid catalyst components.
The titanium content in the solid catalyst component, and the respective contents of 2-isopropyl-2-isopentyl-1,3-dimethoxypropane equivalent to the 1,3-diether compound not having a fluorene structure and diisopropyl succinate equivalent to the succinic acid diester compound, which are the internal electron-donating compounds, as well as physical properties, were measured by the following methods.

<Titanium content in the solid catalyst component>

The titanium content in the solid catalyst component was measured in conformity with the method of JIS 8311-1997.

<Internal electron-donating compound content>

The content of the internal electron-donating compound was determined by the measurement under the following conditions using a gas chromatography (a product of SHIMADZU CORPORATION, GC-14B). The number of moles of the internal electron-donating compound was determined from the gas chromatography measurement result using a calibration curve measured at a known concentration in advance.

(Measurement condition)

· Column: Packed column ($\phi$2.6 $\times$ 2.1 m, Silicone SE-30 10%, Chromosorb WAW DMCS 80/100, a product of GL Sciences Inc.)
· Detector: FID (Flame Ionization Detector)
· Carrier gas: Helium, flow rate 40 mL/min
· Measuring temperatures: Vaporization chamber 280°C, column 225°C, detector 280°C

2. Formation of a polymerization catalyst and polymerization reaction

An autoclave equipped with a stirrer having an internal volume of 2.0 L and purged with a nitrogen gas was charged with 1.32 mmol of triethylaluminum, 0.131 mmol of diisopropyl dimethoxysilane (DIPDMSi), and 0.00264 mmol, in terms of the titanium atom, of the above solid catalyst component to form a catalyst for polymerization. Subsequently, the autoclave was charged with 6.0 L of a hydrogen gas and 1.4 L of liquefied propylene, the preliminary polymerization was carried out at 20°C for 5 minutes, followed by raising the temperature to carry out the polymerization reaction at 70°C for 1 hour.

During this operation, the following methods were employed to measure the polymerization activity per g of the solid catalyst component, the melt flow rate (MFR) of the polymer, the percentage of p-xylene soluble content (XS) of the polymer, the flexural modulus (FM) of the polymer, the percentage of the oriented layers at the cross section of the injection molded plate formed of the obtained polymer, and molecular weight distribution (Mw/Mn and Mz/Mw) of the polymer. The results are shown in Table 2.

<Polymerization activity per g of the solid catalyst component>

The polymerization activity per g of the solid catalyst component was determined by the following equation (7).

Polymerization activity (g/g-cat) = mass of polymer (g)/mass of solid catalyst component (g) (7)          (7)

<Melt flow rate (MFR) of the polymer>

The melt flow rate (MFR) (g/10 min) indicating a melt flow rate of the polymer was measured in conformity with ASTM D 1238 and JIS K 7210.

<Percentage of p-xylene soluble content (XS) of the polymer>

A flask equipped with a stirrer was charged with 4.0 g of the polymer (polypropylene) and 200 mL of p-xylene. Subsequently, an external temperature was set to about 150°C, and the stirring was continued for 2 hours while refluxing p-xylene (a boiling point 137 to 138°C) in the flask to dissolve the above polymer. Then, the solution was cooled over a period of 1 hour until the solution temperature reached 23°C, and the insoluble components and soluble components were filtered and separated. The solution of the above soluble components was collected, p-xylene was distilled off by drying under heating and reduced pressure, and a weight of the obtained residue was determined to calculate a relative percentage (% by mass) in the formed polymer (polypropylene), which was defined as the xylene soluble content (XS).

<Flexural modulus (FM) of the polymer>

Using an injection molding test piece having a thickness of 4.0 mm, a width of 10.0 mm, and a length of 80 mm and manufactured using a product of NISSEI PLASTIC INDUSTRIAL CO., LTD., NEX30III3EG, under the conditions at a molding temperature of 200°C and a mold temperature of 40°C, the flexural modulus was measured at a measurement ambient temperature of 23°C in conformity with JIS K7171.

<Percentage of the oriented layers at the cross section of the injection molded plate formed of the polymer>

1. Formation of a molded product

Injection molding of the polymer of an olefin under the following condition was carried out in conformity with JIS K 7152-1 and JIS K 6921-2 thereby to obtain a molded product having the external shape shown in Figure 1.

Apparatus: NEX-III-3EG, a product of NISSEI PLASTIC INDUSTRIAL CO., LTD.
Type of test piece: Multipurpose test piece type A1 described in JIS K 7139
Melting temperature of resin: 200°C
Mold temperature: 40°C
Injection velocity: 180 mm/sec
Dwelling pressure: 50 MPa-40 sec

2. Creation of measurement specimen (Thin specimen for polarized optical microscope observation)

(1) As shown in Figure 1, the obtained molded product was cut in a direction perpendicular to the resin machine direction MD at a position c1, which is located at a distance of about 2 cm from a gate G in the resin machine direction MD, thereby to obtain a cut product S1 shown in Figure 2(a).
(2) As shown in Figure 2(a), the cut product S1 obtained in (1) was cut at the center part (location c2) parallel to the resin machine direction MD to obtain a cut product S2 shown in Figure 2(b).
(3) As shown in Figure 2(b), the cut product S2 was cut out at a location c3 using a rotary microtome (a product of YAMATO KOHKI INDUSTRIAL CO., LTD., RX-860) parallel to the resin machine direction MD to a thickness of 30 $\mu$m to obtain a thin measurement specimen S3 shown in Figure 2(c).
(4) Figure 2(d) is schematic drawings showing the obtained thin measurement specimen S3, the drawing on the left of Figure 2(d) is a side view of the thin measurement specimen S3 corresponding to Figure 2(c), and the drawing on the right of figure 2(d) is a front view of the thin measurement specimen S4.

3. Polarized optical microscope observation

Figure 3 is an enlarged front view of the thin measurement specimen S3 shown on the right of Figure 2(d). The above measurement specimen S3 was observed using a polarized optical microscope (a product of NIKON Corporation, EPCLIPSE LV-100NDA) to specify a core layer c and oriented layers h1, h2. When the thickness of the core layer is Tc, the thickness of the oriented layers is Th1, Th2, the percentage F (%) of the oriented layers in the thickness of the molded layer was calculated based on the following equation (6).

$$F\ (\%)\ =\ ((Th1\ +\ Th2)/(Th1\ +\ Tc\ +\ Th2))\ \times\ 100 \qquad (6)$$

The thickness of the core layer Tc, and the thickness of the oriented layers Th1, Th2 employ each arithmetic average value when the thickness of the core layer c and the thickness of the oriented layers h1, h2 at any 10 spots of the measurement specimen S3 were measured.

<Elution percentage of the polymer at a high temperature (CFC)>

The elution amount by the molecular weight of the polymer at a high temperature was measured under the following conditions by the cross fractionation chromatography (CFC) (a product of Polymer Char) to determine a percentage of the total amount of the polymer of an olefin eluting at 120°C or more in the total amount of the polymer of an olefin (the percentage of an insoluble o-dichlorobenzene amount at a measuring temperature of 120°C or more in the total amount of the polymer), and further to determine a content percentage of the polymer of an olefin having a molecular weight of 1,000,000 or more in the total amount of the polymer of an olefin eluting at 120°C or more.

Solvent: o-Dichlorobenzene (ODCB)
Column: Shodex GPC UT-806M
Sample concentration: 5 g/L-ODCB
Sample volume: 0.5 mL
Pump flow rate: 1.0 mL/min
Crystallization rate: 1.0°C (SEC)/min
Measuring temperature range: 40 to 140°C (SEC)
Flow rate: 1.0 mL/min
Measuring range: 40°C to 140°C

<Molecular weight distribution of the polymer>

The molecular weight distribution of the polymer was evaluated by the ratio of a mass average molecular weight Mw to a number average molecular weight Mn, Mw/Mn, and the ratio of a Z average molecular weight Mz to a mass average molecular weight Mw, Mz/Mw, determined by the measurement under the following conditions using gel permeation chromatography (GPC) (a product of Waters Corporation, GPCV2000).

Solvent: o-Dichlorobenzene (ODCB)
Temperature: 140°C (SEC)
Column: Shodex GPC UT-806M
Sample concentration: 1 g/liter-ODCB (50 mg/50 mL-ODCB)
Injection volume: 0.5 mL
Flow rate: 1.0 mL/min

(Examples 2 to 4 and Comparative Examples 1 to 6)
The same as in Example 1 was carried out except that the conditions were changed to those shown in Table 1. The results are shown in Table 1 to Table 3.

[Table 1]

| | First step | | | Second step | | Ratio of components used | | | |
|---|---|---|---|---|---|---|---|---|---|
| | $TiCl_4/M$ (molar ratio) | Amount of succinic acid diester compound used (mmol) (S) | Amount of 1,3-diether compound used (mmol) (E1) | $TiCl_4/M$ (molar ratio) | Amount of 1,3-diether compound used (mmol) (E2) | Total $TiCl_4/M$ (molar ratio) (T) | E/S (molar ratio) | E+S/M (molar ratio) | S/T (molar ratio) |
| Example 1 | 2.1 | 22.4 | 5.6 | 3.1 | 0 | 5.2 | 0.3 | 0.16 | 0.025 |
| Example 2 | 2.1 | 22.4 | 0 | 3.1 | 5.6 | 5.2 | 0.3 | 0.16 | 0.025 |
| Example 3 | 2.1 | 24.2 | 5.6 | 3.1 | 0 | 5.2 | 0.2 | 0.17 | 0.027 |
| Example 4 | 2.1 | 22.4 | 0 | 3.1 | 11.2 | 5.2 | 0.5 | 0.19 | 0.025 |
| Comparative Example 1 | 2.1 | 24.5 | 0 | 3.1 | 0 | 5.2 | 0 | 0.14 | 0.027 |
| Comparative Example 2 | 2.1 | 28.1 | 0 | 3.1 | 0 | 5.2 | 0 | 0.16 | 0.031 |
| Comparative Example 3 | 2.1 | - | 24.0 | 3.1 | 0 | 5.2 | - | 0.14 | - |
| Comparative Example 4 | 2.1 | 11.2 | 0 | 3.1 | 11.2 | 5.2 | 1.0 | 0.13 | 0.012 |
| Comparative Example 5 | 2.1 | 17.1 | 0 | 3.1 | 5.6 | 5.2 | 0.3 | 0.13 | 0.019 |
| Comparative Example 6 | 3.1 | 17.1 | 0 | 3.1 | 8.4 | 6.2 | 0.5 | 0.15 | 0.019 |

[Table 2]

| | Solid catalyst component for polymerization of olefin | | | | | | | |
|---|---|---|---|---|---|---|---|---|
| | Titanium content (% by mass) (T) | 1,3-Diether compound content (% by mass) (E) | Succinic acid diester compound content (% by mass) (S) | E+S (% by mass) | E/S (molar ratio) | S/T (molar ratio) | Pore volume $\leq 1\ \mu m$ ($cm^3/g$) | Specific surface area ($m^2/g$) |
| Example 1 | 3.19 | 3.3 | 15.8 | 19.1 | 0.25 | 0.92 | 0.4 | 330 |

(continued)

| | Solid catalyst component for polymerization of olefin | | | | | | | |
|---|---|---|---|---|---|---|---|---|
| | Titanium content (% by mass) (T) | 1,3-Diether compound content (% by mass) (E) | Succinic acid diester compound content (% by mass) (S) | E+S (% by mass) | E/S (molar ratio) | S/T (molar ratio) | Pore volume ≤ 1 μm (cm$^3$/g) | Specific surface area (m$^2$/g) |
| Example 2 | 3.35 | 2.2 | 15.4 | 17.6 | 0.17 | 0.85 | 0.4 | 280 |
| Example 3 | 3.73 | 2.3 | 17.1 | 19.4 | 0.16 | 0.85 | 0.5 | 350 |
| Example 4 | 3.11 | 6.7 | 13.0 | 19.7 | 0.61 | 0.77 | 0.4 | 300 |
| Comparative Example 1 | 3.00 | 0.0 | 17.1 | 17.1 | - | 1.06 | 0.5 | 380 |
| Comparative Example 2 | 3.00 | 0.0 | 17.9 | 17.9 | - | 1.11 | 0.4 | 360 |
| Comparative Example 3 | 3.67 | 16.5 | 0.0 | 16.5 | - | - | 0.5 | 340 |
| Comparative Example 4 | 4.23 | 7.0 | 9.2 | 16.2 | 0.91 | 0.40 | 0.4 | 350 |
| Comparative Example 5 | 3.49 | 4.0 | 13.2 | 17.1 | 0.36 | 0.70 | 0.5 | 360 |
| Comparative Example 6 | 3.65 | 5.9 | 12.8 | 18.7 | 0.55 | 0.65 | 0.4 | 330 |

[Table 3]

| | Propylene polymerization activity (g/g-cat) | MFR (g/10 min) | Flexural modulus (MPa) | Elution percentage of polymer at high temperature (CFC) | | XS (% by mass) | Oriented layer percentage (%) | Molecular weight distribution | |
| --- | --- | --- | --- | --- | --- | --- | --- | --- | --- |
| | | | | Elution percentage at 120°C or more (% by mass) | Eluting at 120°C or more and having molecular weight of 1,000,000 or more (% by mass) | | | Mw/Mn | Mz/Mw |
| Example 1 | 47,600 | 130 | 2,120 | 29.8 | 3.3 | 1.8 | 24 | 8.4 | 5.4 |
| Example 2 | 51,900 | 110 | 2,120 | 31.8 | 3.1 | 2.2 | 30 | 9.2 | 5.5 |
| Example 3 | 62,800 | 94 | 2,110 | 30.3 | 2.9 | 1.7 | 24 | 6.8 | 4.8 |
| Example 4 | 45,700 | 91 | 1,900 | 28.3 | 2.2 | 1.2 | 29 | 7.0 | 5.2 |
| Comparative Example 1 | 55,000 | 68 | 2,130 | 32.3 | 3.5 | 2.4 | 27 | 11.0 | 6.6 |
| Comparative Example 2 | 48,800 | 69 | 2,180 | 37.1 | 3.8 | 2.7 | 27 | 11.0 | 6.1 |
| Comparative Example 3 | 56,600 | 200 | 1,730 | 16.7 | 0.7 | 1.1 | 12 | 4.1 | 3.0 |
| Comparative Example 4 | 56,500 | 140 | 1,790 | 20.0 | 1.3 | 1.6 | 12 | 5.2 | 3.3 |
| Comparative Example 5 | 57,300 | 86 | 1,740 | 29.0 | 2.4 | 1.5 | 24 | 6.6 | 4.5 |
| Comparative Example 6 | 57,300 | 120 | 1,760 | 24.8 | 2.1 | 1.5 | 22 | 5.2 | 3.8 |

[Industrial Applicability]

The present invention can accordingly provide the solid catalyst component for polymerization of an olefin comprising an internal electron-donating compound other than phthalate esters, and capable of producing a polymer having an excellent melt flow rate, high rigidity, and a reduced amount of low molecular weight polymers.

**Claims**

1. A solid catalyst component for polymerization of an olefin comprising:

   magnesium, titanium, halogen, a 1,3-diether compound not having a fluorene structure, and a succinic acid diester compound,
   wherein a sum of a content of the 1,3-diether compound not having a fluorene structure and a content of the succinic acid diester compound in a total content of the components in terms of the solid content is 13.0% by mass or more,
   a molar ratio (S/T), represented by a molar content of the succinic acid diester compound (S) in the total content of the components to a molar content of the titanium (T) in the total content of the components, is 0.71 to 1.30,
   a molar ratio (E/S), represented by a molar content of the 1,3-diether compound not having a fluorene structure (E) in the total content of the components to the molar content of the succinic acid diester compound (S) in the total content of the components, is 0.10 to 0.70, and
   a total pore volume of a diameter of 1 $\mu$m or less as measured by a mercury intrusion method is 0.3 to 1.0 cm$^3$/g, and a specific surface area is 200 m$^2$/g or more.

2. The solid catalyst component for polymerization of an olefin according to claim 1, wherein the 1,3-diether compound not having a fluorene structure is one or more compounds selected from the 1,3-diether compounds represented by the following formula (1):

$$R^1\text{-O-CH}_2\text{-CR}^2R^3\text{-CH}_2\text{-O-R}^4 \qquad (1)$$

   wherein $R^2$ and $R^3$ represent a hydrogen atom, a halogen atom, an alkyl group having 1 to 12 carbon atoms, a vinyl group, an alkenyl group having 3 to 12 carbon atoms, a cycloalkyl group or cycloalkenyl group having 3 to 12 carbon atoms, an aromatic hydrocarbon group or halogen-substituted aromatic hydrocarbon group having 6 to 12 carbon atoms, an aromatic hydrocarbon group having 7 to 12 carbon atoms and having a substituent, an alkylamino group having 1 to 12 carbon atoms, or a dialkylamino group having 2 to 12 carbon atoms; $R^2$ and $R^3$ may be the same as or different from each other; $R^2$ and $R^3$ may be bonded to each other to form a ring; $R^1$ and $R^4$ represent an alkyl group having 1 to 12 carbon atoms, a vinyl group, an alkenyl group having 3 to 12 carbon atoms, a cycloalkyl group having 3 to 6 carbon atoms, an aromatic hydrocarbon group or halogen-substituted aromatic hydrocarbon group having 6 to 12 carbon atoms, or an aromatic hydrocarbon group having 7 to 12 carbon atoms and having a substituent; and $R^1$ and $R^4$ may be the same as or different from each other.

3. The solid catalyst component for polymerization of an olefin according to claim 1, wherein the succinic acid diester compound is one or more compounds selected from the compounds represented by the following formula (2):

$$R^5\text{-O-C(=O)-CHR}^6\text{CHR}^7\text{-C(=O)-O-R}^8 \qquad (2)$$

   wherein $R^6$ and $R^7$, the same as or different from each other, are a hydrogen atom or an alkyl group having 1 to 4 carbon atoms, and $R^5$ and $R^8$, the same as or different from each other, are a straight chain alkyl group or branched chain alkyl group having 2 to 4 carbon atoms.

4. A method for producing the solid catalyst component for polymerization of an olefin according to any one of claims 1 to 3 by allowing a dialkoxy magnesium, a titanium halogen compound, a 1,3-diether compound not having a fluorene structure, and a succinic acid diester compound to mutually contact,

   wherein the titanium halogen compound is allowed to contact the dialkoxy magnesium multiple times, of which when the titanium halogen compound is allowed to contact the dialkoxy magnesium for the first time, a contact amount of the titanium halogen compound per 1.0 mol of the dialkoxy magnesium is 1.5 to 10.0 mol,
   a total amount of the titanium halogen compound used per 1.0 mol of the dialkoxy magnesium is 5.0 to 18.0 mol,

a sum of a molar amount of the 1,3-diether compound not having a fluorene structure used and a molar amount of the succinic acid diester compound used per 1.0 mol of the dialkoxy magnesium is 0.10 to 0.20 mol,

a molar ratio (S/T), represented by a molar amount of the succinic acid diester compound used (S) to a total molar amount of the titanium halogen compound used (T), is 0.020 to 0.040,

a molar ratio (E/S), represented by a molar amount of the 1,3-diether compound not having a fluorene structure used (E) to the molar amount of the succinic acid diester compound used (S), is 0.50 or less, and

the dialkoxy magnesium is composed of secondary particles that are assemblies of primary particles having an average particle diameter of less than 2 $\mu$m, has a specific surface area of 10 $m^2/g$ or more and less than 50 $m^2/g$, and has a particle size distribution index (SPAN) of 1.30 or less.

5. A catalyst for polymerization of an olefin comprising:

(I) the solid catalyst component for polymerization of an olefin according to any one of claims 1 to 3; and
(II) an organoaluminum compound represented by the following formula (3):

$$R^9_p AlQ_{3-p} \qquad (3)$$

wherein $R^9$ is an alkyl group having 1 to 6 carbon atoms, Q is a hydrogen atom or halogen, and p satisfies $0 < p \leq 3$, wherein when more than one $R^9$ are present, each $R^9$ may be the same as or different from each other, and when more than one Q are present, each Q may be the same or different from each other.

6. The catalyst for polymerization of an olefin according to claim 5, comprising:

(I) the solid catalyst component for polymerization of an olefin according to any one of claims 1 to 3;
(II) an organoaluminum compound represented by the following formula (3):

$$R^9_p AlQ_{3-p} \qquad (3)$$

wherein $R^9$ is an alkyl group having 1 to 6 carbon atoms, Q is a hydrogen atom or halogen, and p satisfies $0 < p \leq 3$, wherein when more than one $R^9$ are present, each $R^9$ may be the same as or different from each other, and when more than one Q are present, each Q may be the same or different from each other; and
(III) an external electron-donating compound.

7. A method for producing a polymer of an olefin, comprising polymerizing an olefin using the catalyst for polymerization of an olefin according to claim 5 or 6.

Fig.1

Fig.2

(a)

S1    c2

2cm

MD

(b)

S2    c3

2cm

MD

(c)

S3

2cm

MD

(d)

S3

S3

h2   c   h1

MD

Fig.3

## INTERNATIONAL SEARCH REPORT

| International application No. |
|---|
| **PCT/JP2024/007993** |

| A. | CLASSIFICATION OF SUBJECT MATTER |
|---|---|

*C08F 4/654*(2006.01)i; *C08F 4/02*(2006.01)i; *C08F 10/00*(2006.01)i
FI: C08F4/654; C08F10/00 510; C08F4/02

According to International Patent Classification (IPC) or to both national classification and IPC

| B. | FIELDS SEARCHED |
|---|---|

Minimum documentation searched (classification system followed by classification symbols)

C08F4; C08F10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2016-525597 A (BASELL POLIOLEFINE ITALIA S.R.L.) 25 August 2016 (2016-08-25) claims, paragraphs [0019]-[0029], examples | 1-7 |
| Y | JP 2014-510819 A (BASELL POLIOLEFINE ITALIA S.R.L.) 01 May 2014 (2014-05-01) claims, paragraphs [0025]-[0034], examples | 1-7 |
| Y | JP 2016-513167 A (BASELL POLIOLEFINE ITALIA S.R.L.) 12 May 2016 (2016-05-12) claims, paragraphs [0010]-[0015], examples | 1-7 |
| Y | JP 2015-60175 A (DIC CORPORATION) 30 March 2015 (2015-03-30) paragraph [0006] | 1-7 |
| Y | JP 2003-327614 A (IDEMITSU PETROCHEMICAL CO., LTD.) 19 November 2003 (2003-11-19) examples 1, 2 | 1-7 |
| Y | JP 2017-95581 A (TOHO TITANIUM CO., LTD.) 01 June 2017 (2017-06-01) examples 1, 4 | 1-7 |

✓ Further documents are listed in the continuation of Box C.  ✓ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 April 2024** | **07 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

International application No.

**PCT/JP2024/007993**

### C.    DOCUMENTS CONSIDERED TO BE RELEVANT

| Category* | Citation of document, with indication, where appropriate, of the relevant passages | Relevant to claim No. |
|---|---|---|
| Y | JP 2005-531675 A (BASELL POLIOLEFINE ITALIA S.P.A.) 20 October 2005 (2005-10-20) paragraphs [0004], [0005] | 1-7 |
| Y | WO 2017/170077 A1 (TOHO TITANIUM CO., LTD.) 05 October 2017 (2017-10-05) claims, paragraph [0013] | 4 |
| A | JP 3-706 A (HIMONT INC.) 07 January 1991 (1991-01-07) entire text | 1-7 |

Form PCT/ISA/210 (second sheet) (July 2022)

**INTERNATIONAL SEARCH REPORT**
Information on patent family members

International application No.

**PCT/JP2024/007993**

| Patent document cited in search report | | | Publication date (day/month/year) | Patent family member(s) | | | Publication date (day/month/year) |
|---|---|---|---|---|---|---|---|
| JP | 2016-525597 | A | 25 August 2016 | US | 2016/0159947 | A1 | |
| | | | | claims, paragraphs [0029]-[0072], examples | | | |
| | | | | EP | 2829557 | A1 | |
| | | | | CN | 105377914 | A | |
| JP | 2014-510819 | A | 01 May 2014 | US | 2014/0046010 | A1 | |
| | | | | claims, paragraphs [0024]-[0068], examples | | | |
| | | | | EP | 2697271 | A1 | |
| | | | | CN | 103476806 | A | |
| | | | | KR | 10-2014-0015458 | A | |
| JP | 2016-513167 | A | 12 May 2016 | US | 2016/0032032 | A1 | |
| | | | | claims, paragraphs [0010]-[0053], examples | | | |
| | | | | EP | 2778182 | A1 | |
| | | | | KR | 10-2015-0135331 | A | |
| | | | | CN | 105899554 | A | |
| JP | 2015-60175 | A | 30 March 2015 | (Family: none) | | | |
| JP | 2003-327614 | A | 19 November 2003 | US | 2005/0187359 | A1 | |
| | | | | examples 1, 2 | | | |
| | | | | EP | 1505084 | A1 | |
| | | | | CN | 1653092 | A | |
| | | | | KR | 10-2004-0106512 | A | |
| | | | | TW | 200400205 | A | |
| JP | 2017-95581 | A | 01 June 2017 | US | 2019/0023820 | A1 | |
| | | | | examples 1, 4 | | | |
| | | | | EP | 3381952 | A1 | |
| | | | | TW | 201738279 | A | |
| | | | | CN | 108290974 | A | |
| | | | | KR | 10-2018-0086205 | A | |
| JP | 2005-531675 | A | 20 October 2005 | US | 2005/0014631 | A1 | |
| | | | | paragraph [0001] | | | |
| | | | | EP | 1525231 | A1 | |
| | | | | CN | 1545525 | A | |
| WO | 2017/170077 | A1 | 05 October 2017 | US | 2020/0299422 | A1 | |
| | | | | claims, paragraph [0012] | | | |
| | | | | EP | 3438083 | A1 | |
| | | | | CN | 108779056 | A | |
| | | | | KR | 10-2018-0128394 | A | |
| | | | | TW | 201805265 | A | |
| JP | 3-706 | A | 07 January 1991 | US | 4971937 | A | |
| | | | | entire text | | | |
| | | | | EP | 361494 | A2 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 57063310 A
- JP 62051633 A
- JP 3074341 A
- JP 4368391 A
- JP 8073388 A

**Non-patent literature cited in the description**

- Method for determination of titanium in titanium ores. *JIS 8311-1997*